# EUROPEAN PATENT SPECIFICATION

(11) **EP 3 720 069 B1**
(45) Date of publication and mention of the grant of the patent: **19.02.2025**
(21) Application number: 17936799.0
(22) Date of filing: 31.12.2017
(51) Int. Cl.: H04L 67/61

(54) **PACKET SENDING METHOD AND DEVICE**
PAKETSENDUNGSVERFAHREN UND VORRICHTUNG
MÉTHODE ET DISPOSITIF D'ENVOI DE PAQUETS

(43) Date of publication of application: 07.10.2020
(73) Proprietor: HUAWEI TECHNOLOGIES CO., LTD., Shenzhen, Guangdong 518129 (CN)
(72) Inventor: ZHANG, Zhenxing, Shenzhen, Guangdong 518129 (CN); LI, Nan, Shenzhen, Guangdong 518129 (CN)
(74) Representative: Gill Jennings & Every LLP
(86) International application number: PCT/CN2017/120430
(87) International publication number: WO 2019/127597

(56) References cited:
- WO-A1-2012/171461
- CN-A- 1 725 732
- CN-A- 101 060 489
- CN-A- 104 168 212
- US-A1- 2009 168 790
- US-A1- 2015 078 395

## Description

### TECHNICAL FIELD

Embodiments of this application relate to the network transmission field, and in particular, to a packet sending method, and device.

### BACKGROUND

A delay-sensitive network is usually a communications network applied in a special field such as industrial control. Usually, such a network has an upper limit requirement for an end-to-end delay of specific traffic from a transmit end to a receive end. If a time at which a packet arrives at a destination is later than a committed time, the packet may become invalid due to loss of timeliness. Usually, for delay-sensitive traffic, a specific resource needs to be reserved for the traffic at nodes, ports, and the like on an end-to-end path in a network in which the traffic is located, to avoid unpredictable congestion in a transmission process of the traffic and an additional queuing delay.

In the prior art, a global clock synchronization method is currently used to send delay-sensitive traffic. In the method, first, a strict synchronization requirement is imposed on clocks of all nodes in an entire network; and second, a unified time window pattern is maintained for the entire network. An ingress queue is statistically configured for each port in each time window on all the nodes in the entire network. After receiving a packet, a network device adds the packet to a queue of a corresponding egress port based on a time window in which a global clock is currently located. The queue to which the packet is added is opened in a next time window, and the packet is scheduled and sent.

To meet an upper limit requirement for a delay of the delay-sensitive traffic, the foregoing method has two constraints during use. Constraint 1: A packet sent by an upstream network device in a time window N needs to be received in a time window N of a next network device. Constraint 2: A packet received by a current network device in a time window N needs to enter a queue in the time window N. In this way, in a process in which a packet is sent from a source end to a destination end, on each network device that the packet passes, it can be ensured that the packet that is received by a network device in an N^{th} time window can be definitely sent by the network device in an (N+1)^{th} time window, and the packet is received in an (N+1)^{th} time window of a next node. Then a maximum value of an end-to-end delay of the packet is (K+1)×T, where K is a hop count of the packet in the network, and T is a globally unified time window width. In this way, a committed transmission delay is available.

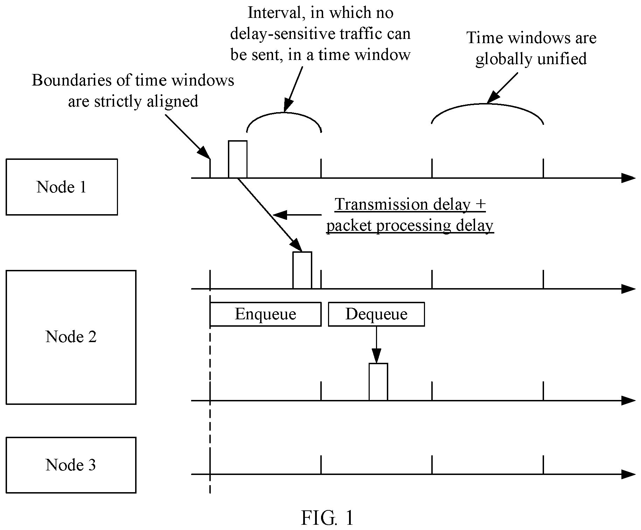

According to the foregoing method, enqueue timing and dequeue timing of the packet are shown in FIG. 1. It can be learned from FIG. 1 that, because there may be a transmission delay between network devices and there may be a packet processing delay within a network device, the packet sent by the source end needs to undergo a transmission delay and a packet processing delay before arriving at a queue of a next network device at an end of a time window shown in FIG. 1. Therefore, the source end needs to send the packet not later than a specific time point; otherwise, it cannot be ensured that the packet enters the queue in a same time window.

In other words, to ensure that the delay-sensitive traffic has a committed upper delay limit, the source end can use only a very small part of time in each time window to send the delay-sensitive traffic. For example, it is assumed that an entire-network unified time window time is 30 µs, a distance between network nodes is 1 km, a packet processing delay of a network node is 20 µs, and a link transmission rate is 10 Gbps. According to the foregoing method, a bandwidth available for the delay-sensitive traffic is lower than 1.6 Gbps (a 1-km optical fiber has a 5-µs transmission delay, and a 5-µs transmission delay and a 20-µs packet processing delay are unavailable in a 30-µs time window; therefore, the available bandwidth is (30 µs - 20 µs - 5 µs)/30 µs × 10 Gbps = 1.6 Gbps). It can be learned that, in the prior art, the bandwidth available for the delay-sensitive traffic is relatively low, and resource utilization is low.

US2009168790A1 discloses a credit based queue Scheduler dynamically adjusts credits depending upon at least a moving average of incoming packet size to alleviate the impact of traffic burstiness and packet size variation, and increase the performance of the scheduler by lowering latency and jitter. For the case when no service differentiation is required, the credit is adjusted by computing a weighted moving average of incoming packets for the entire scheduler. For the case when differentiation is required, the credit for each queue is determined by a product of a Sum of credits given to all queues and priority levels of each queue.

US2015/007839 relates to a traffic control apparatus at which packets of a plurality of packet flows arrive includes a plurality of buffers corresponding to a plurality of times, a selector configured to read a packet accumulated in one of the plurality of buffers corresponding to a current time, and a scheduler configured to decide one of the plurality of buffers to accumulate a packet of each of the plurality of packet flows.

### SUMMARY

The present invention is defined by the appended claims. Embodiments and aspects not falling within the scope of the claims are considered useful for understanding the invention. Embodiments of this application provide a packet sending method and device to increase bandwidth used for delay-sensitive traffic and improve bandwidth utilization.

According to a first aspect, an embodiment of this application provides a packet sending method. The method is applied to a network device in a transmission system. In the method, the network device receives a packet, and identifies that a flow to which the packet belongs is delay-sensitive traffic for a reserved resource, where the reserved resource includes a quantity of packets that can be sent for the flow in one time window. Then the network device arranges, based on the quantity of packets that can be sent for the flow in one time window, and an accumulated packet sending status in the time window, and a quantity of packets already in a queue used to send the flow, the packet in a specific time window for sending.

In this embodiment of this application, an output time window of a packet is dynamically determined based on real-time information (for example, an accumulated packet sending status in one time window), but not determined fully based on a static configuration. In this manner, flexibility of a packet sending process can be increased. A transmission device only needs to ensure that a quantity of packets sent in each time window meets a quantity of packets that can be sent in one time window, but does not need to constrain a sending time of each packet. In other words, after a quantity of packets sent in one time window reaches a quantity of packets that can be sent, a next packet is arranged by the network device in a next time window for sending. Therefore, in this manner, a packet sent by an upstream device at any time point in one time window may be arranged by the network device in a proper time window for sending. This avoids a constraint on a time at which the upstream device sends a packet, increases available bandwidth for delay-sensitive traffic, and reduces resource waste of bandwidth.

Queue resource reservation information and traffic resource reservation information used to send the flow are preconfigured in the network device. The queue resource reservation information includes a queue used to send the flow, and enqueue timing and output timing of the queue, where the enqueue timing is used to define an ingress queue of each time window, and the output timing is used to define an open/closed state of each queue in each time window. The traffic resource reservation information records a current ingress queue of the flow, and a packet count used to represent a quantity of packets in the current ingress queue. The accumulated packet sending status in the time window is the quantity of packets in the current ingress queue.

Correspondingly, that the network device arranges, based on the quantity of packets that can be sent for the flow in one time window and an accumulated quantity of packets that have been sent in the time window, the packet in a specific time window for sending includes:
determining, by the network device, an arrival time window of the packet, where the arrival time window is a time window of the packet at an egress port of the network device when the packet arrives at the network device; querying for the quantity of packets in the current ingress queue; determining an ingress queue of the flow based on the arrival time window, the enqueue timing of the queue, the quantity of packets that can be sent for the flow in one time window, and the quantity of packets in the current ingress queue; adding the packet to the determined ingress queue of the flow; and
opening, in a time window that is defined in the output timing and that is for opening a queue in which the packet is located, the queue in which the packet is located, and sending the packet.

Packets are sent in each time window based on a required quantity. Therefore, regarding a result, delay-sensitive traffic still has a committed end-to-end delay. In other words, a total delay of a packet in a transmission process can be controlled by defining the time window-based enqueue timing and output timing, without a need of strictly controlling a delay in each network device by constraining a sending time. This can ensure that delay-sensitive traffic has a committed end-to-end delay, and can also increase available bandwidth for the delay-sensitive traffic and reduce resource waste of bandwidth.

In a possible implementation, the determining, by the network device, an ingress queue of the flow based on the arrival time window, the enqueue timing of the queue, the quantity of packets that can be sent for the flow in one time window, and the quantity of packets in the current ingress queue specifically includes: if the quantity of packets in the current ingress queue has reached the quantity of packets that can be sent in one time window, determining, by the network device, an ingress queue of a next time window of the arrival time window as the ingress queue of the flow; or if the quantity of packets in the current ingress queue has not reached the quantity of packets that can be sent in one time window, determining an ingress queue of the arrival time window as the ingress queue of the flow.

In this embodiment, an ingress queue is dynamically switched, and after a quantity of packets sent in one time window reaches a quantity of packets that can be sent, a next packet is arranged in a next time window for sending, thereby increasing flexibility. This increases available bandwidth for delay-sensitive traffic, and can also ensure that packets sent in a time window meet a requirement for a quantity of packets that can be sent in the time window, and meet a traffic characteristic requirement of the delay-sensitive traffic.

In a possible implementation, in the enqueue timing, a time window further has an alternative ingress queue, and an alternative ingress queue of a time window is an ingress queue of a next time window.

Correspondingly, the determining, by the network device, an ingress queue of the flow based on the arrival time window, the enqueue timing of the queue, the quantity of packets that can be sent for the flow in one time window, and the quantity of packets in the current ingress queue specifically includes:
if the quantity of packets in the current ingress queue has reached the quantity of packets that can be sent in one time window, determining, by the network device, an alternative ingress queue of the arrival time window as the ingress queue of the flow; or if the quantity of packets in the current ingress queue has not reached the quantity of packets that can be sent in one time window, determining an ingress queue of the arrival time window as the ingress queue of the flow.

In this embodiment, the alternative ingress queue is set, and an ingress queue of a next time window of the arrival time window does not need to be queried for in a packet sending process, thereby improving processing efficiency.

In a possible implementation, in the output timing, an ingress queue of an M^{th} time window is in an open state in an (M+1)^{th} time window, and is in a closed state in another time window, where M is an integer greater than or equal to 1.

In this embodiment, the output timing is controlled to ensure that a packet received by the network device in a local N^{th} time window is sent in a local (N+1)^{th} (or (N+2)^{th}) time window. This can ensure that a maximum value of an end-to-end delay is a sum of ((End-to-end hop count + 1) × (Time window size)) + Time window boundary difference on a path. Therefore, in this embodiment of this application, available bandwidth for delay-sensitive traffic can be increased, and an end-to-end delay of delay-sensitive traffic can also be better ensured.

In a possible implementation, the method further includes: after the ingress queue of the flow is determined, updating, by the network device based on the determined ingress queue, the ingress queue recorded in the traffic resource reservation information; and restoring, by the network device, the packet count recorded in the traffic resource reservation information to an initial value each time the network device updates the recorded ingress queue, and performing accumulation on the packet count each time the network device adds a packet to the updated ingress queue.

In this embodiment, dynamic information such as the packet count is recorded, and directly applied to a packet sending process. This can reduce calculation in the packet sending process, and improve processing efficiency.

In a possible implementation, the network device reserves a resource for the flow in advance, and the traffic resource reservation information is configured in the resource reservation process.

In this embodiment, a delay of delay-sensitive traffic in a transmission process can be reduced by reserving the resource.

In a possible implementation, queue resource reservation information and traffic resource reservation information used to send the flow are preconfigured in the network device. The queue resource reservation information includes a queue in a one-to-one correspondence with the flow, and a dequeue gating configured for the queue, where the dequeue gating is used to control a quantity of packets sent in each time window. The traffic resource reservation information includes the quantity of packets that can be sent for the flow in one time window.

Correspondingly, that the network device arranges, based on the quantity of packets that can be sent for the flow in one time window and an accumulated packet sending status in the time window, the packet in a specific time window for sending specifically includes:
adding, by the network device, the packet to a queue corresponding to the flow to which the packet belongs; and extracting, based on the dequeue gating, the packet from the queue corresponding to the flow, and sending the packet, where the dequeue gating is updated based on a time window, and an initial value of the dequeue gating in each time window is a quantity of packets that can be sent for the flow corresponding to the queue in one time window, and decreases progressively based on a quantity of packets sent in each time window.

In this embodiment, a time window is not limited during enqueue, but packet sending in each time window is controlled in a dequeue process. Therefore, no requirement is imposed on a time at which a packet is received, and no constraint is imposed on a sending time of an upstream device. The upstream device can send delay-sensitive traffic nearly in an entire time window, thereby increasing available bandwidth for delay-sensitive traffic and reducing resource waste of bandwidth.

In a possible implementation, the network device monitors a time window update; and each time a time window is updated, obtains, from the traffic resource reservation information, the quantity of packets that can be sent for the flow in one time window, and updates the dequeue gating based on the quantity of packets that can be sent for the flow in one time window.

In this embodiment, the dequeue gating is updated based on a time window and the quantity of packets that can be sent for the flow in one time window. This ensures that packets sent in each time window meet a requirement for a quantity of packets that can be sent in the time window, and meet a traffic characteristic requirement of the delay-sensitive traffic.

In a possible implementation, the extracting, based on the dequeue gating, the packet from the queue corresponding to the flow, and sending the packet specifically includes: checking, by the network device in real time, a packet in the queue corresponding to the flow and a token in the token bucket; and if there is a packet in the queue corresponding to the flow and there is a token in the token bucket, extracting and sending the packet, until there is no token in the token bucket or there is no packet in the queue corresponding to the flow.

In this embodiment, a quantity of packets sent in each time window can be ensured. This can ensure that an end-to-end delay has a committed upper limit. Therefore, in this embodiment of this application, available bandwidth for delay-sensitive traffic can be increased, and it can also be ensured that the delay-sensitive traffic has a committed end-to-end delay.

In a possible implementation, the network device reserves the resource for the flow in advance, and the traffic resource reservation information and the queue resource reservation information are configured in the resource reservation process.

In this embodiment, a queue resource is allocated based on a flow, but not allocated based on a time window. Therefore, time windows in an entire network do not need to be aligned. This solution may be deployed on a device not supporting time alignment, thereby extending applicability.

According to a second aspect, an embodiment of this application provides a packet sending management method. The method is applied to a network device that can transmit delay-sensitive traffic. In the method, the network device receives a packet, and identifies that a flow to which the packet belongs is delay-sensitive traffic for a reserved resource. The network device obtains an arrival time window of the packet and traffic resource reservation information of the flow. The traffic resource reservation information records a quantity of packets that can be sent for the flow in one time window, and a quantity of packets in a current ingress queue. The network device determines an ingress queue of the flow based on the arrival time window, the quantity of packets that can be sent for the flow in one time window, and the quantity of packets in the current ingress queue; adds the packet to the ingress queue; and sends the packet through queue scheduling.

In this embodiment of this application, the network device determines the ingress queue of the flow based on the arrival time window of the packet, the quantity of packets that can be sent for the flow in one time window, and the quantity of packets in the current ingress queue; dynamically adds packets to different queues; and performs scheduling and output. In this manner, flexibility of a packet sending process can be increased. A transmission device needs only to ensure that a quantity of packets sent in each time window meets a quantity of packets that can be sent in one time window, but does not need to constrain a sending time of each packet. In other words, after a quantity of packets sent in one time window reaches a quantity of packets that can be sent, a next packet is arranged by the network device in a next time window for sending. Therefore, in this manner, a packet sent by an upstream device at any time point in one time window may be arranged by the network device in a proper time window for sending. This avoids a constraint on a time at which the upstream device sends a packet, increases available bandwidth for delay-sensitive traffic, and reduces resource waste of bandwidth.

In a possible implementation, queue resource reservation information and traffic resource reservation information used to send the flow are preconfigured in the network device. The queue resource reservation information includes the queue used to send the flow and enqueue timing of the queue, where the enqueue timing is used to define an ingress queue of each time window. That the network device determines an ingress queue of the flow based on the arrival time window, the quantity of packets that can be sent for the flow in one time window, and the quantity of packets in the current ingress queue includes: if the quantity of packets in the current ingress queue has reached the quantity of packets that can be sent in one time window, determining, by the network device, an ingress queue, in the enqueue timing, of a next time window of the arrival time window as the ingress queue of the flow; or if the quantity of packets in the current ingress queue has not reached the quantity of packets that can be sent in one time window, determining an ingress queue, in the enqueue timing, of the arrival time window as the ingress queue of the flow.

In a possible implementation, the queue resource reservation information further includes output timing, where the output timing is used to define an open/closed state of each queue in each time window. The sending the packet through queue scheduling includes: opening, by the network device in a time window that is defined in the output timing and that is for opening a queue in which the packet is located, the queue in which the packet is located, and sending the packet.

According to a third aspect, an embodiment of this application provides a network device. The network device includes: the receiving module, configured to receive a packet; and the processing module, configured to identify that a flow to which the packet belongs is delay-sensitive traffic for a reserved resource, where the reserved resource includes a quantity of packets that can be sent for the flow in one time window. Then the processing module arranges, based on the quantity of packets that can be sent for the flow in one time window, and an accumulated quantity of packets that have been sent in the time window, the packet in a specific time window for sending.

In this embodiment of this application, an output time window of a packet is dynamically determined based on real-time information (for example, an accumulated packet sending status in one time window), but not determined fully based on a static configuration. In this manner, flexibility of a packet sending process can be increased. A transmission device needs only to ensure that a quantity of packets sent in each time window meets a quantity of packets that can be sent in one time window, but does not need to constrain a sending time of each packet. In other words, after a quantity of packets sent in one time window reaches a quantity of packets that can be sent, a next packet is arranged by the network device in a next time window for sending. Therefore, in this manner, a packet sent by an upstream device at any time point in one time window may be arranged by the network device in a proper time window for sending. This avoids a constraint on a time at which the upstream device sends a packet, increases available bandwidth for delay-sensitive traffic, and reduces resource waste of bandwidth.

In a possible implementation, the network device further includes a first storage module. The first storage module is configured to store preconfigured queue resource reservation information and traffic resource reservation information that are used to send the flow. The queue resource reservation information includes the queue used to send the flow, and enqueue timing and output timing of the queue, where the enqueue timing is used to define an ingress queue of each time window, and the output timing is used to define an open/closed state of each queue in each time window. The traffic resource reservation information records a current ingress queue of the flow, and a packet count used to represent a quantity of packets in the current ingress queue. The accumulated packet sending status in the time window is the quantity of packets in the current ingress queue.

Correspondingly, that the processing module arranges, based on the quantity of packets that can be sent for the flow in one time window and an accumulated quantity of packets that have been sent in the time window, the packet in a specific time window for sending specifically includes: determining, by the processing module, an arrival time window of the packet, where the arrival time window is a time window of the packet at an egress port of the network device when the packet arrives at the network device; querying for the quantity of packets in the current ingress queue; then determining, by the processing module, an ingress queue of the flow based on the arrival time window, the enqueue timing of the queue, the quantity of packets that can be sent for the flow in one time window, and the quantity of packets in the current ingress queue, and adding the packet to the determined ingress queue of the flow; and then opening, in a time window that is defined in the output timing and that is for opening a queue in which the packet is located, the queue in which the packet is located, and sending the packet.

In this embodiment, packets can be sent in each time window based on a required quantity. Therefore, regarding a result, delay-sensitive traffic still has a committed end-to-end delay. In other words, in this embodiment, a total delay of a packet in a transmission process can be controlled by defining the time window-based enqueue timing and output timing, without a need of strictly controlling a delay in each network device by constraining a sending time. This can ensure that delay-sensitive traffic has a committed end-to-end delay, and can also increase available bandwidth for the delay-sensitive traffic and reduce resource waste of bandwidth.

In a possible implementation, the determining, by the processing module, an ingress queue of the flow based on the arrival time window, the enqueue timing of the queue, the quantity of packets that can be sent for the flow in one time window, and the quantity of packets in the current ingress queue specifically includes: if the quantity of packets in the current ingress queue has reached the quantity of packets that can be sent in one time window, determining, by the processing module, an ingress queue of a next time window of the arrival time window as the ingress queue of the flow; or if the quantity of packets in the current ingress queue has not reached the quantity of packets that can be sent in one time window, determining an ingress queue of the arrival time window as the ingress queue of the flow.

In this embodiment, an ingress queue is dynamically switched, and after a quantity of packets sent in one time window reaches a quantity of packets that can be sent, a next packet is arranged in a next time window for sending, thereby increasing flexibility. This increases available bandwidth for delay-sensitive traffic, and can also ensure that packets sent in a time window meet a requirement for a quantity of packets that can be sent in the time window, and meet a traffic characteristic requirement of the delay-sensitive traffic.

In a possible implementation, the network device further includes a resource reservation module. The resource reservation module is configured to reserve a resource for the flow in advance, and the traffic resource reservation information is configured in the resource reservation process.

In a possible implementation, the network device further includes a second storage module. The second storage module is configured to store preconfigured queue resource reservation information and traffic resource reservation information that are used to send the flow. The queue resource reservation information includes a queue in a one-to-one correspondence with the flow, and a dequeue gating configured for the queue, where the dequeue gating is used to control a quantity of packets sent in each time window. The traffic resource reservation information includes the quantity of packets that can be sent for the flow in one time window.

Correspondingly, that the processing module arranges, based on the quantity of packets that can be sent for the flow in one time window and an accumulated packet sending status in the time window, the packet in a specific time window for sending specifically includes: adding, by the processing module, the packet to a queue corresponding to the flow to which the packet belongs; and extracting, based on the dequeue gating, the packet from the queue corresponding to the flow, and sending the packet, where the dequeue gating is updated based on a time window, and an initial value of the dequeue gating in each time window is a quantity of packets that can be sent for the flow corresponding to the queue in one time window, and decreases progressively based on a quantity of packets sent in each time window.

In this embodiment, a time window is not limited during enqueue, but packet sending in each time window is controlled in a dequeue process. Therefore, no requirement is imposed on a time at which a packet is received, and no constraint is imposed on a sending time of an upstream device. The upstream device can send delay-sensitive traffic nearly in an entire time window, thereby increasing available bandwidth for delay-sensitive traffic and reducing resource waste of bandwidth.

In a possible implementation, the network device further includes a second resource reservation module. The second resource reservation module is configured to reserve a resource for the flow in advance, and the traffic resource reservation information and the queue resource reservation information are configured in the resource reservation process.

In this embodiment, a queue resource is allocated based on a flow, but not allocated based on a time window. Therefore, time windows in an entire network do not need to be aligned. This solution may be deployed on a device not supporting time alignment, thereby extending applicability.

According to a fourth aspect, an embodiment of this application provides a packet sending system. The system includes a network control plane and at least one network device. After accepting a traffic application request sent by a source-end device, the network control plane sends a traffic application success notification to the at least one network device on a path on which the flow is located, where the notification includes information about the flow that applies for resource reservation. The network device is configured to: perform resource reservation configuration for the flow based on the information about the flow in the notification; receive a packet; and identify that a flow to which the packet belongs is delay-sensitive traffic for a reserved resource, where the reserved resource includes a quantity of packets that can be sent for the flow in one time window. Then the network device arranges, based on the quantity of packets that can be sent for the flow in one time window, and an accumulated quantity of packets that have been sent in the time window, the packet in a specific time window for sending.

In this embodiment of this application, an output time window of a packet is dynamically determined based on real-time information (for example, an accumulated packet sending status in one time window), but not determined fully based on a static configuration. In this manner, flexibility of a packet sending process can be increased. A transmission device needs only to ensure that a quantity of packets sent in each time window meets a quantity of packets that can be sent in one time window, but does not need to constrain a sending time of each packet. In other words, after a quantity of packets sent in one time window reaches a quantity of packets that can be sent, a next packet is arranged by the network device in a next time window for sending. Therefore, in this manner, a packet sent by an upstream device at any time point in one time window may be arranged by the network device in a proper time window for sending. This avoids a constraint on a time at which the upstream device sends a packet, increases available bandwidth for delay-sensitive traffic, and reduces resource waste of bandwidth.

In a possible implementation, the network device is further configured to perform any method according to the possible implementations of the first aspect.

According to a fifth aspect, an embodiment of this application provides a network device. The network device includes a processor. The processor is coupled to a memory. When executing a program in the memory, the processor implements any method according to the first aspect or the possible implementations of the first aspect.

For an effect of implementations of the network device in this embodiment, refer to descriptions of a corresponding part in the foregoing and descriptions of a related part in the specification. Details are not described herein.

According to a six aspect, an embodiment of this application provides a computer-readable storage medium. The computer-readable storage medium stores program code. The program code is used to instruct to perform any method according to the first aspect or the possible implementations of the first aspect.

For an effect of implementations of the computer-readable storage medium, refer to descriptions of a corresponding part in the foregoing and descriptions of a related part in the specification. Details are not described herein.

### BRIEF DESCRIPTION OF DRAWINGS

FIG. 1 is a schematic diagram of enqueue timing and dequeue timing of a packet according to an embodiment of this application;
FIG. 2 is a schematic architectural diagram of a packet transmission system according to an embodiment of this application;
FIG. 3 is a flowchart of a traffic resource reservation method according to an embodiment of this application;
FIG. 4 is a schematic diagram of a scheduling priority according to an embodiment of this application;
FIG. 5 is a flowchart of a method for sending a packet by a network device according to an embodiment of this application;
FIG. 6 is a flowchart of another method for sending a packet by a network device according to an embodiment of this application;
FIG. 7 is a flowchart of still another method for sending a packet by a network device according to an embodiment of this application;
FIG. 8 is a flowchart of packet dequeue according to an embodiment of this application;
FIG. 9 is a flowchart of a token bucket update method according to an embodiment of this application;
FIG. 10 is a schematic structural diagram of a network device according to an embodiment of this application;
FIG. 11 is a schematic structural diagram of another network device according to an embodiment of this application; and
FIG. 12 is a schematic structural diagram of still another network device according to an embodiment of this application.

### DESCRIPTION OF EMBODIMENTS

The following further describes the present invention in detail with reference to the accompanying drawings.

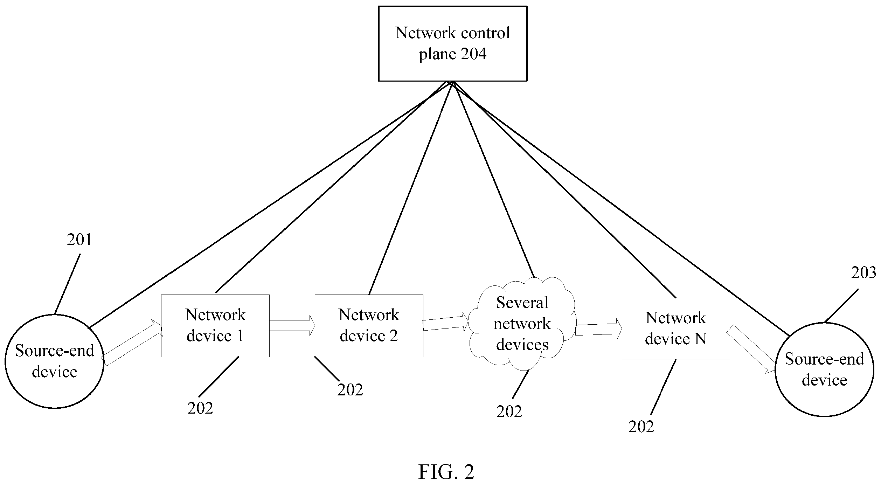

Embodiments of this application may be applied to a transmission system that can transmit delay-sensitive traffic. The transmission system may be located in a layer 2 switching network or a layer 3 switching network. FIG. 2 is a schematic structural diagram of a transmission system according to an embodiment of this application. The transmission system may include a source-end device 201, at least one network device 202, a destination device 203, and a network control plane 204.

The source-end device 201 may be a control host in an industrial control network scenario, an industrial sensor, a sensor in an Internet of Things scenario, or the like. The network device 202 may be a switching device, a router, or the like. The destination device 203 may be an executor (for example, a servo motor in an industrial control network scenario, or an information processing center in an Internet of Things scenario). The network control plane 204 may be a controller or a management server.

At an initialization stage of the transmission system, the network control plane 204 sets a uniform time window size (for example, 125 us is set as one time window), and sends the specified time window size to all network devices 202 in the transmission system. It should be noted that the network control plane 204 may alternatively send the time window size only to a network device 202 that participates in transmission of delay-sensitive traffic. The network control plane 204 may determine, based on a network topology and according to an existing packet forwarding rule, the network device 202 that participates in transmission of delay-sensitive traffic. The network device 202 configures a boundary phase of a time window of each local port based on the time window size specified by the network control plane 204. Through the foregoing initialization, time windows of the network devices 202 in the transmission system are set to be time windows that have a same size but whose boundaries may not be aligned. In a subsequent packet transmission process, a current time window may be obtained through calculation or table lookup based on a real time.

In the delay-sensitive network field, a time window is an important concept. The time window is a consecutive period of time. Usually, the network control plane 204 divides a time of an egress port of the network device into a plurality of time windows that periodically cycle, for example, "a time window 1, a time window 2, a time window 3, a time window 1, ... ". Each time window has a specific data sending capability based on a link rate. For example, for a 10-Gbit link and a 125-µs time window, 1250-Kbit data (approximately 100 1.5-KB packets) may be sent in one time window. Therefore, in a subsequent packet transmission process, packet enqueue and dequeue may be controlled based on a time window.

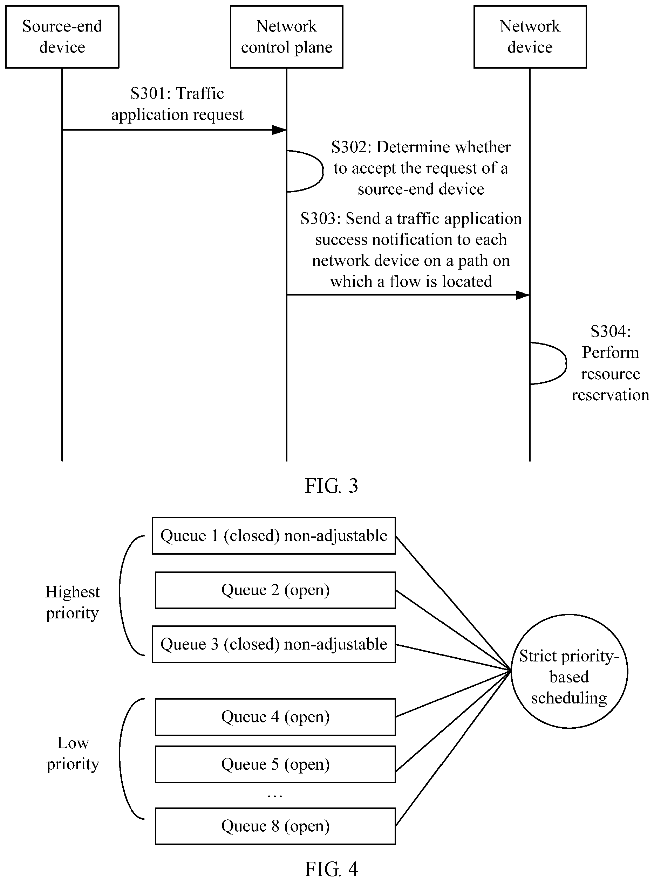

When the transmission system is applied in a scenario for transmitting delay-sensitive traffic, before a packet is transmitted, a traffic resource needs to be reserved for the delay-sensitive traffic in network devices on an end-to-end path on which the delay-sensitive traffic is to be transmitted, so as to avoid unpredictable congestion of the delay-sensitive traffic and an additional queuing delay. The traffic resource reservation process is shown in FIG. 3.

S301. A source-end device sends a traffic application request to a network control plane.

Because an end-to-end delay of delay-sensitive traffic needs to be ensured, traffic application usually needs to be performed before the delay-sensitive traffic is sent. The traffic application is usually performed based on "several packets per time window" (usually referred to as a traffic characteristic) or a corresponding traffic rate.

The traffic application request carries information about a flow and a traffic characteristic that are required for the application. The information about the flow may include information (for example, a source address, a destination address, a destination port number, a differentiated services code point (Differentiated Services Code Point, DSCP), or a protocol) that can identify the flow.

S302. The network control plane determines, based on a remaining sending capability of a corresponding egress port in each network device on a path on which the flow is located, whether to accept the request.

The corresponding egress port in the network device is a port, in the network device, that is configured to send the flow. The network control plane may determine a transmission path of the flow based on a network topology of a transmission system and according to an existing packet forwarding rule. The transmission path includes a network device transmitting the flow, and an egress port in the network device.

If the traffic characteristic requested in the traffic application request is greater than a current remaining sending capability of any egress port on the path, the request fails, and the network control plane rejects the request and feeds back failure information to the source-end device. If the traffic characteristic requested in the traffic application request is less than or equal to a current remaining sending capability of any egress port on the path, the request succeeds, and the network control plane accepts the request, feeds back success information to the source-end device, and updates a sending capability of an egress port in each network device on the path. For example, for a 125-µs and 10-Gbps network, a flow 1 applies for sending 90 1.5-KB packets in each period, and the application succeeds. After the application of the flow 1 is completed, a sending capability of approximately 10 packets remains in each time window. Then a flow 2 applies for sending 50 1.5-KB packets in a time window, and the request fails.

A sending capability of a port is a maximum quantity of packets that can be sent by the port in one time window. The sending capability may be obtained through calculation based on link bandwidth, a window size, and a maximum packet size.

S303. After accepting the traffic application request, the network control plane sends a traffic application success notification to each network device on the path on which the flow is located.

The network control plane may send the notification by using a control packet. The notification includes the information about the flow that applies for resource reservation and the traffic characteristic. The information about the flow and the traffic characteristic may be obtained from the traffic application request in step S301.

It should be noted that only one network device is shown in the figure, and the network control plane actually sends traffic application success notifications to all network devices on the path. S304. Each network device that receives the notification performs traffic resource reservation configuration for the flow.

The traffic resource reservation configuration mainly includes the following steps:
1. Record the information about the flow. Specifically, the information about the flow may be updated to a flow table of the network device. In a subsequent packet transmission process, the network device may identify the flow based on the flow table. The flow may be identified by using a method of parsing a source or destination IP, a port number, a DSCP, a protocol, or the like of the flow.
2. Configure traffic resource reservation information for the flow, where the traffic resource reservation information includes the traffic characteristic (that is, a quantity of packets that can be sent for the flow in one time window).

After the foregoing resource reservation procedure is completed, the network device may transmit the flow based on the information configured in the resource reservation process.

In the packet transmission process in this embodiment of this application, for a packet of delay-sensitive traffic, the network device arranges, based on the quantity of packets that can be sent for the flow in one time window and an accumulated packet sending status in one time window, the packet in a specific time window for sending.

A difference from the prior art lies in: An output time window of a packet is dynamically determined based on real-time information (for example, an accumulated packet sending status in one time window), but not determined fully based on a static configuration. In this manner, flexibility of a packet sending process can be increased. A transmission device needs only to ensure that a quantity of packets sent in each time window meets a quantity of packets that can be sent in one time window, but does not need to constrain a sending time of each packet. In other words, after a quantity of packets sent in one time window reaches a quantity of packets that can be sent, a next packet is arranged by the network device in a next time window for sending. Therefore, according to this solution in which a sending time window of a packet is arranged based on a quantity of packets that can be sent in one time window and an accumulated packet sending status in one time window, a packet sent by an upstream device at any time point in one time window may be arranged by the network device in a proper time window for sending. This avoids a constraint on a time at which the upstream device sends a packet, and the upstream device can send delay-sensitive traffic nearly in an entire time window. In addition, a sending time window of a packet is determined based on a quantity of packets that can be sent in one time window and an accumulated packet sending status in one time window; therefore, it can be ensured that packets sent in each time window meet a requirement for a quantity of packets that can be sent in the time window, and meet a traffic characteristic requirement of delay-sensitive traffic. Moreover, packets can be sent in each time window based on a required quantity. Therefore, regarding a result, delay-sensitive traffic still has a committed end-to-end delay. Therefore, according to this dynamic arrangement mechanism used in this embodiment of this application, available bandwidth for delay-sensitive traffic can be increased, and resource waste of bandwidth can be reduced on premises that the delay-sensitive traffic has a committed end-to-end delay and that output traffic of all network devices in a network still meet a traffic characteristic.

The following describes in detail the method for transmitting a packet of delay-sensitive traffic in this embodiment of this application.

For ease of understanding, first, a queue mechanism of a network device is briefly described.

In the network device, a queue used to cache packets is set for each port. After entering the network device, a packet first enters a cache queue of an egress port, then leaves the queue according to a queue scheduling mechanism for sending. To better differentiate traffic levels, the network device usually uses different levels of queue mechanisms. In other words, a plurality of levels of cache queues may be set for one port in the network device. In dequeue scheduling, a high-priority queue is preferentially scheduled. FIG. 4 is a schematic diagram of a scheduling priority. In FIG. 4, a queue 1, a queue 2, and a queue 3 are highest-priority queues, and a queue 4 to a queue 8 are low-priority queues. If the queue 2, and the queue 4 to the queue 8 are all open, the network device preferentially schedules a packet in the queue 2 for sending, and then schedules a packet in the queue 4 to the queue 8. For a network device that can transmit delay-sensitive traffic, the network device reserves in advance, on an egress port used to send delay-sensitive traffic, queues used to send the delay-sensitive traffic. These queues are usually queues with highest priorities, such as the queue 1, the queue 2, and the queue 3 in FIG. 4.

According to the foregoing queue mechanism, the network device usually includes two processes in a packet sending process: an enqueue process of adding a received packet to a queue, and a dequeue process of scheduling the packet from the queue for sending.

For these two processes, this embodiment of this application proposes two packet sending optimization solutions. Solution 1: mainly related to an improvement on the packet enqueue process. In this solution, packet enqueue may be controlled based on a quantity of packets that can be sent in one time window and an accumulated packet sending status in one time window. The network device may dynamically determine, based on the quantity of packets that can be sent in one time window and the accumulated packet sending status in one time window, an ingress queue of a flow to which a packet belongs; and update a preconfigured ingress queue of the flow.

Solution 2: mainly related to an improvement on the packet dequeue process. In this solution, packet dequeue may be controlled based on a quantity of packets that can be sent in one time window and an accumulated packet sending status in one time window. The network device may set a dequeue gating based on the quantity of packets that can be sent in one time window, and control a packet dequeue quantity in one time window based on the dequeue gating.

The following describes in detail the two solutions in Embodiment 1 and Embodiment 2.

### Embodiment 1

In this embodiment, a network device reserves at least three queues for delay-sensitive traffic in advance, and configures enqueue timing and output timing for these queues based on a time window.

The enqueue timing is timing at which each queue becomes an ingress queue. The ingress queue is a queue that a packet can enter. The time window-based enqueue timing is used to define an ingress queue corresponding to each time window. The enqueue timing is used at a packet enqueue stage, and is used to determine a packet ingress queue in each time window. The output timing is timing for opening each queue at a dequeue scheduling stage. The time window-based output timing is used to define an open/closed state of each queue in each time window. The output timing is used at a packet dequeue stage, and is used to control opening/closing of each queue in each time window. The enqueue timing and the output timing may be stored by using a table structure, or may be stored by using another storage structure (such as an array), as shown in Table 1 and Table 2:

**Table 1**

| Time window sequence number | Ingress queue | Alternative ingress queue |
|---|---|---|
| Time window KN+1 | Queue 2 | Queue 3 |
| Time window KN+2 | Queue 3 | Queue 4 |
| Time window KN+3 | Queue 4 | Queue 5 |
| ... | ... | ... |
| Time window KN+K-1 | Queue K | Queue 1 |
| Time window KN+K | Queue 1 | Queue 2 |

**Table 2**

| | | | | | | |
|---|---|---|---|---|---|---|
| Time window KN+1 | Queue 1 open | Queue 2 closed | Queue 3 closed | ... | Queue K closed | Other queues open |
| Time window KN+2 | Queue 1 closed | Queue 2 open | Queue 3 closed | ... | Queue K closed | Other queues open |
| Time window KN+3 | Queue 1 closed | Queue 2 closed | Queue 3 open | ... | Queue K closed | Other queues open |
| ... | | | | | | |
| Time window KN+K | Queue 1 closed | Queue 2 closed | Queue 3 closed | ... | Queue K open | Other queues open |

Table 1 stores the enqueue timing. Table 2 stores the output timing. In Table 1 and Table 2, N is an integer greater than or equal to 0, K is a quantity of queues for sending delay-sensitive traffic, and a value of K is an integer greater than or equal to 3.

In the enqueue timing shown in Table 1, each time window has an alternative ingress queue, in addition to an ingress queue. In this way, when a quantity of packets of a flow that are in an ingress queue of a time window has reached a quantity of packets that can be sent for the flow in one time window, a candidate packet of the flow may be placed in the alternative ingress queue of the time window. An alternative ingress queue of a time window may be set as an ingress queue of a next time window. In this way, an extra packet in the time window may be placed in the ingress queue of the next time window.

In the output timing shown in Table 2, an ingress queue of an M^{th} time window is in an open state in an (M+1)^{th} time window, and is in a closed state in another time window, where M is an integer greater than or equal to 1. In addition, the queue 1 to the queue K are high-priority queues used to send delay-sensitive traffic, and other queues are lower-priority queues used to send other traffic.

Table 1 and Table 2 are merely examples. In actual application, alternatively, no alternative ingress queue may be configured in the enqueue timing. When a quantity of packets in an ingress queue of a time window reaches a quantity of packets that can be sent in one time window, an extra packet is directly placed in an ingress queue of a next time window.

It should be noted that different delay-sensitive traffic may share a same queue. When a queue is shared, enqueue timing and output timing of the queue are also shared.

The foregoing process of reserving the queues and configuring the enqueue timing and the output timing may be referred to as queue resource reservation. The queue resource reservation may be completed at any time before the traffic resource reservation shown in FIG. 3 (for example, may be completed at an initialization stage of a transmission system), or may be completed at a first traffic resource reservation stage at which the queue resource needs to be used.

In this embodiment, in the traffic resource reservation information configured in step S304, the network device further configures an ingress queue option used to record an ingress queue of a flow, and a packet count option used to count packets in the ingress queue. A packet count recorded in the packet count option may represent a quantity of packets in the ingress queue of the flow. An initial ingress queue of the flow that is configured in the ingress queue option is an ingress queue of a first time window in the enqueue timing. The ingress queue of the flow and the packet count of the ingress queue are flow state information, and may be updated depending on a real-time state in a packet sending process. The ingress queue option may be updated based on an ingress queue determined in the packet sending process. The traffic resource reservation information may be stored by using a table structure, or may be stored by using another storage structure (such as an array). A structure of the traffic resource reservation information is shown in Table 3:

**Table 3**

| Flow number | Packet count | Resource reservation information | Ingress queue |
|---|---|---|---|
| Flow 1 | 1 | One packet per time window | Queue 2 |
| Flow 2 | 1 | One packet per time window | Queue 2 |

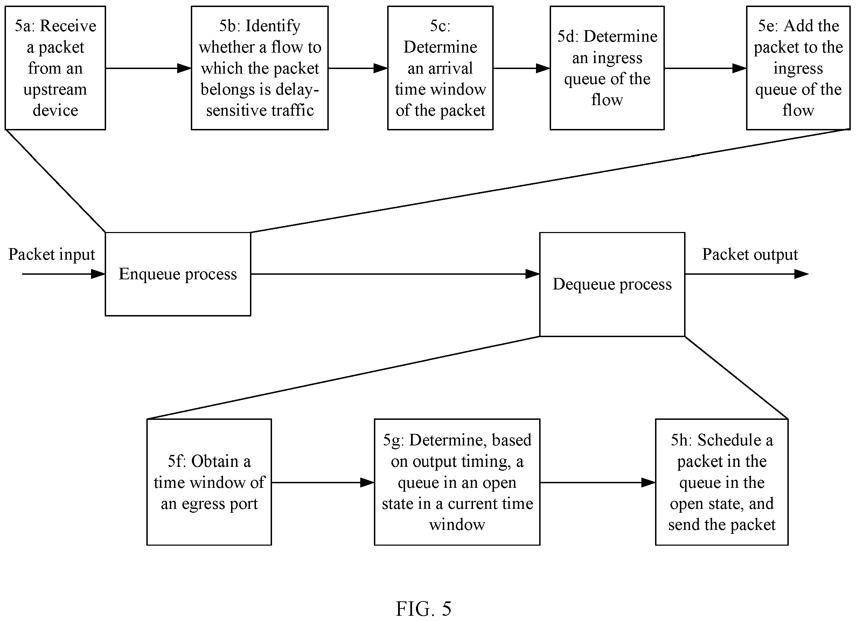

The network device performs packet transmission based on the information configured in the foregoing queue resource reservation and traffic resource reservation processes. FIG. 5 is a flowchart of a method for sending a packet by a network device according to Embodiment 1.

5a to 5e are a packet enqueue process, and 5f to 5h are a packet dequeue process.

5a: A network device receives a packet from an upstream device.

After receiving the packet, the network device determines an egress port of the packet. A method for determining the egress port may be implemented by using the prior art. Details are not described herein.

5b: The network device identifies whether a flow to which the packet belongs is delay-sensitive traffic.

The network device may obtain, through parsing, information in a packet header, such as a source or destination IP, a port, a DSCP, or a protocol number; and searches, by using the information obtained through parsing, flow information recorded in a resource reservation process, to identify whether the flow to which the packet belongs is delay-sensitive traffic. This embodiment is described by using an example in which the flow to which the packet belongs is delay-sensitive traffic. For a packet of non-delay sensitive traffic, the network device places the packet in another lower-priority queue. Enqueue and scheduling processes of the packet are implemented by using the prior art. Details are not described in this embodiment of this application.

5c: After identifying that the flow is delay-sensitive traffic, the network device determines an arrival time window of the packet.

The arrival time window is a time window of the packet at the egress port of the network device when the packet arrives at the network device.

In a specific implementation process, the network device may first obtain a current time at which the packet is received. The network device may obtain the current time based on a clock crystal oscillator in a transmission system, or may obtain the current time based on time information included in content of the packet.

The network device performs an operation or table lookup based on a port number of the egress port determined in 5a and the current time, to obtain a current time window of the egress port. The calculation or table lookup configuration may be configured during initialization of the transmission system.

5d: The network device determines an ingress queue of the flow based on the arrival time window of the packet, enqueue timing of a queue, a quantity of packets that can be sent in one time window for the flow to which the packet belongs, and a quantity of packets in a current ingress queue.

The network device may obtain, from a traffic characteristic recorded in traffic resource reservation information, the quantity of packets that can be sent for the flow in one time window; and may obtain the quantity of packets in the current ingress queue from a packet count in the traffic resource reservation information.

Specifically, if the quantity of packets in the current ingress queue has reached the quantity of packets that can be sent in one time window, the network device determines an ingress queue of a next time window of the arrival time window as the ingress queue of the flow; or if the quantity of packets in the current ingress queue has not reached the quantity of packets that can be sent in one time window, the network device determines an ingress queue of the arrival time window as the ingress queue of the flow.

The foregoing determining method is a processing manner in which no alternative ingress queue is set for a time window in the enqueue timing.

An implementation in which an alternative ingress queue is set for a time window in the enqueue timing is as follows:
When setting the enqueue timing, the network device sets an alternative ingress queue of a time window as an ingress queue of a next time window, as shown in Table 1. A process of determining the ingress queue of the flow specifically includes: if the quantity of packets in the current ingress queue has reached the quantity of packets that can be sent in one time window, determining, by the network device, an alternative ingress queue of the arrival time window as the ingress queue of the flow; or if the quantity of packets in the current ingress queue has not reached the quantity of packets that can be sent in one time window, determining an ingress queue of the arrival time window as the ingress queue of the flow.

After the ingress queue of the flow is determined, the network device may update, based on the determined ingress queue, an ingress queue of the flow that is recorded in the network device. The update is specifically: performing the update if the determined ingress queue has changed relative to the recorded ingress queue.

Each time the network device updates the ingress queue in the traffic resource reservation information, the network device restores the packet count recorded in the traffic resource reservation information to an initial value. The initial value may be set to 0, and may progressively increase subsequently. A value recorded in a progressively increasing manner is the quantity of packets in the current ingress queue. Alternatively, the initial value may be set to any value, and may progressively decrease subsequently. A difference between the initial value and a value recorded in a progressively decreasing manner is the quantity of packets in the current ingress queue.

5e: The network device adds the packet to the determined ingress queue of the flow.

After adding the packet to the determined ingress queue of the flow, the network device further accumulates the packet count recorded in the traffic resource reservation information. The accumulation herein may be performed in the progressively increasing manner or the progressively decreasing manner. When the initial value of the packet count is set to 0, the accumulation is performed in the progressively increasing manner; or when the initial value of the packet count is set to any value, the accumulation is performed in the progressively decreasing manner.

5f: The network device obtains a time window of an egress port.

For a method for obtaining the time window of the egress port by the network device, refer to step 5c. Details are not described herein again.

5g: The network device determines, based on output timing, a queue in an open state in a current time window.

The current time window herein is the time window obtained in step 5f. Assuming that the current time window is the time window 2, in the output timing shown in Table 2, open queues are the queue 2 and another lower-priority queue.

5h: The network device schedules a packet in the queue in the open state, and sends the packet.

In a scheduling process, a packet in a high-priority queue among open queues is preferentially scheduled and sent. For priority-based scheduling, refer to FIG. 4. Details are not described herein again.

According to the scheduling process from step 5f to step 5h, a queue in which the packet received in step 5a is located is opened in a time window that is defined in the output timing and that is for opening the queue, and then the packet is sent.

In the foregoing solution, the enqueue timing of the queue is based on a time window, and packet dequeue is also scheduled based on a time window. In other words, after the ingress queue of the flow is determined, it is equivalent to that an output time window of the packet added to the ingress queue is determined. Therefore, according to the foregoing solution in which the ingress queue of the flow is dynamically determined, each received packet may be arranged in a specific time window for sending.

In the foregoing embodiment, the enqueue timing and the output timing are defined, and the flow state information is recorded; therefore, a packet of a time window may be flexibly adjusted to an ingress queue of a next time window. This breaks a constraint of statically configuring an ingress queue on a sending time of an upstream device. The upstream device can send delay-sensitive traffic nearly in an entire time window, thereby increasing available bandwidth for delay-sensitive traffic and reducing resource waste of bandwidth.

In addition, in the foregoing embodiment, an ingress queue of an M^{th} time window is opened for sending in an (M+1)^{th} time window. Therefore, according to the foregoing solution, a packet received by the network device in a local N^{th} time window is sent in a local (N+1)^{th} (or (N+2)^{th}) time window. This can ensure that a maximum value of an end-to-end delay is a sum of ((End-to-end hop count + 1) × (Time window size)) + Time window boundary difference on a path. Therefore, in this embodiment of this application, available bandwidth for delay-sensitive traffic can be increased, and it can also be ensured that delay-sensitive traffic has a committed end-to-end delay. In addition, according to the solution provided in this embodiment of this application, time windows in an entire network do not need to be aligned. This solution may be deployed on a device not supporting time alignment, thereby extending applicability.

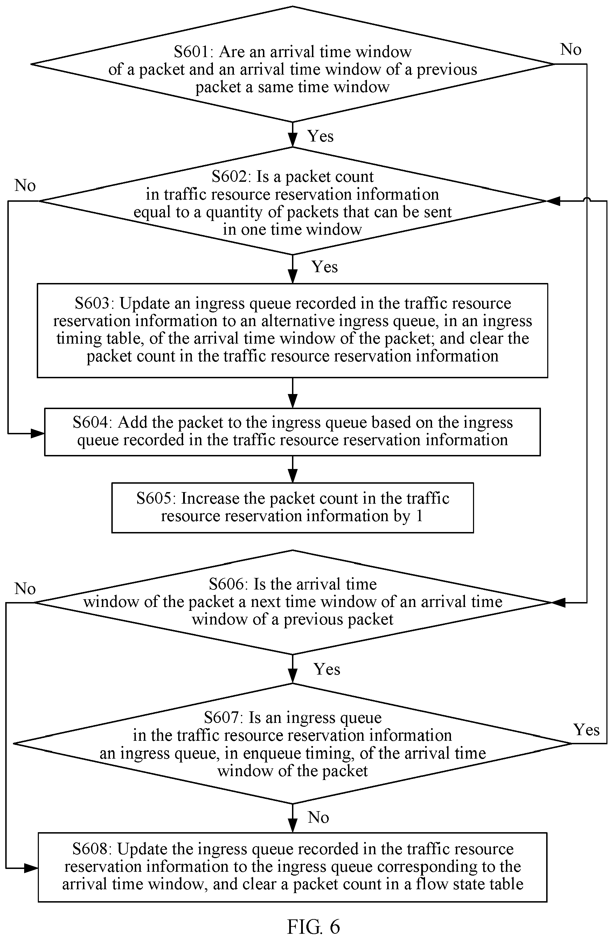

With reference to FIG. 6, the following describes in detail specific implementations of step 5d shown in FIG. 5.

FIG. 6 is a flowchart of a method for determining an ingress queue according to Embodiment 1. The method includes the following steps.

S601. The network device determines whether the arrival time window of the packet and an arrival time window of a previous packet are a same time window. If the two arrival time windows are the same time window, step S602 is performed; or if the two arrival time windows are not the same time window, step S606 is performed.

S602. The network device determines whether the packet count in the traffic resource reservation information is equal to the quantity of packets that can be sent in one time window. If the packet count is equal to the quantity of packets that can be sent, it is determined that the ingress queue of the flow is the alternative ingress queue of the arrival time window, and S603 to S605 are performed; or if the packet count is not equal to the quantity of packets that can be sent, it is determined that the ingress queue of the flow is the ingress queue of the arrival time window, and S604 and S605 are performed.

In this embodiment, an example is used. In the example, the initial value of the packet count in the traffic resource reservation information is 0, and accumulation is performed in a manner of increasing the count by 1 each time a packet is added. In this manner, the packet count in the traffic resource reservation information may be directly compared with the traffic characteristic of the flow (namely, the quantity of packets that can be sent for the flow in one time window).

This embodiment is described by using an example in which an alternative ingress queue is configured in an enqueue timing table.

S603. The network device updates the ingress queue recorded in the traffic resource reservation information to an alternative ingress queue, in an enqueue timing table, of the arrival time window of the packet; and clears the packet count in the traffic resource reservation information.

S604. Add the packet to the ingress queue based on the ingress queue recorded in the traffic resource reservation information.

It should be noted that, in this embodiment of this application, there are two implementations of adding the packet to the ingress queue determined in S602. Manner 1: The ingress queue recorded in the traffic resource reservation information is updated first, and then enqueue is performed based on a recorded ingress queue. It should be noted that enqueue is directly performed based on the recorded ingress queue if no update is required (that is, the determined ingress queue remains unchanged relative to the recorded ingress queue). Manner 2: Enqueue is performed directly based on the determined ingress queue. According to the manner of directly performing enqueue based on the determined ingress queue, the operation of updating the ingress queue recorded in the traffic resource reservation information may be performed before or after the enqueue. The enqueue and the operation are definitely performed in sequence.

This embodiment is described by using the manner 1 as an example.

S605. The network device increases the packet count in the traffic resource reservation information by 1.

S606. The network device determines whether the arrival time window of the packet is a next time window of an arrival time window of a previous packet. If the arrival time window of the packet is the next time window of the arrival time window of the previous packet, S607 is performed; or if the arrival time window of the packet is not the next time window of the arrival time window of the previous packet, S608 is performed.

If the arrival time window of the packet is the next time window of the arrival time window of the previous packet, it indicates that the packet is the first packet in the arrival time window of the packet. Step S606 is a branch of step S601 when a determining result of step S601 is negative. Therefore, if the arrival time window of the packet is not the next time window of the arrival time window of the previous packet, the arrival time window of the packet is a time window after the next time window of the arrival time window of the previous packet. In this case, the packet is also the first packet in the arrival time window of the packet. In other words, provided that the arrival time window of the packet and the arrival time window of the previous packet are not the same time window, the packet is the first packet in the arrival time window of the packet.

S607. Determine whether the ingress queue in the traffic resource reservation information is the ingress queue, in the enqueue timing, of the arrival time window of the packet. If the ingress queue in the traffic resource reservation information is the ingress queue in the enqueue timing, step S602 is performed; or if the ingress queue in the traffic resource reservation information is not the ingress queue in the enqueue timing, step S608 is performed.

If the ingress queue in the traffic resource reservation information is the ingress queue, in the enqueue timing, of the arrival time window of the packet, it indicates that an alternative ingress queue is used in a previous time window of the arrival time window of the packet. Alternatively, if the ingress queue in the traffic resource reservation information is not the ingress queue, in the enqueue timing, of the arrival time window of the packet, it indicates that no alternative ingress queue is used in a previous time window of the arrival time window of the packet.

S608. The network device updates the ingress queue recorded in the traffic resource reservation information to the ingress queue corresponding to the arrival time window, clears the packet count in the traffic resource reservation information, and then continues to perform S604 and S605.

### Embodiment 2

In this embodiment, a network device also needs to perform queue resource reservation and traffic resource reservation.

A queue resource reservation manner in this embodiment is different from the queue resource reservation manner in Embodiment 1. In this embodiment, the network device configures a queue in a one-to-one correspondence with each piece of delay-sensitive traffic. In other words, in this embodiment, a queue is allocated based on a flow instead of a time window. Therefore, in this embodiment, there is no time window-based enqueue timing or output timing. In this embodiment, the network device further configures a dequeue gating for a queue of each flow. The dequeue gating is used to control a quantity of packets sent in each time window. Therefore, in this embodiment, queue resource reservation information includes a correspondence between the flow and the queue of the flow, and also includes the dequeue gating of the queue of each flow.

For a traffic resource reservation process in this embodiment, refer to the embodiment shown in FIG. 3. Details are not described herein again.

In this embodiment, the queue resource reservation may be performed together with the traffic resource reservation, or may be performed before the traffic resource reservation.

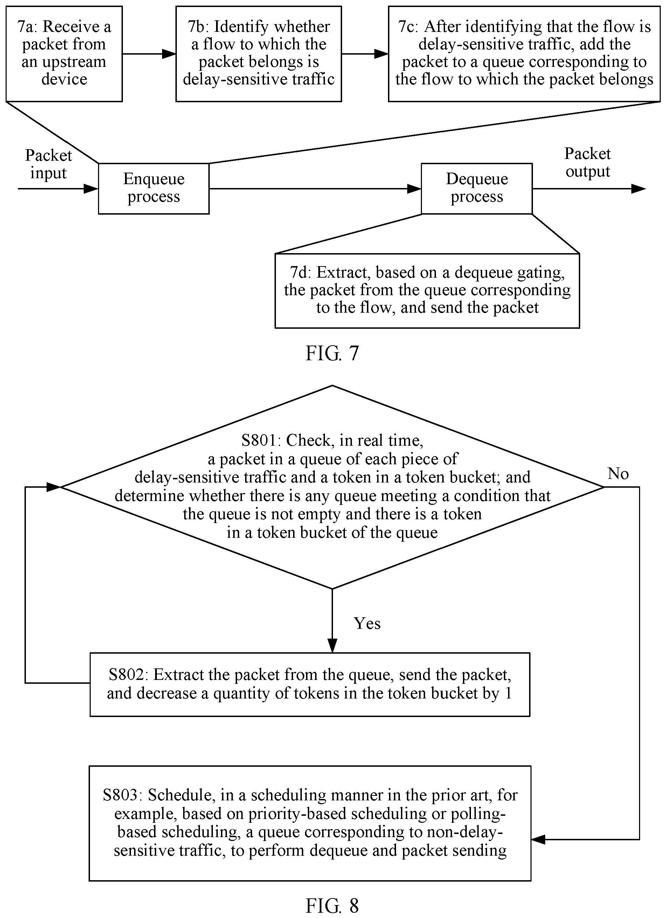

The network device performs packet transmission based on the information configured in the foregoing queue resource reservation and traffic resource reservation processes. FIG. 7 is a flowchart of a method for sending a packet by a network device according to Embodiment 2.

7a to 7c are a packet enqueue process, and 7d is a packet dequeue process.

7a: A network device receives a packet from an upstream device.

7b: The network device identifies whether a flow to which the packet belongs is delay-sensitive traffic.

For a specific implementation of this step, refer to step 5b in the embodiment shown in FIG. 5. Details are not described herein again.

This embodiment is also described by using an example in which the flow to which the packet belongs is delay-sensitive traffic. For a packet of non-delay sensitive traffic, the network device places the packet in another lower-priority queue. Enqueue and scheduling processes of the packet are implemented by using the prior art. Details are not described in this embodiment of this application.

7c: After identifying that the flow is delay-sensitive traffic, the network device adds the packet to a queue corresponding to the flow to which the packet belongs.

7d: The network device extracts, based on a dequeue gating, the packet from the queue corresponding to the flow, and sends the packet.

Specifically, the network device checks the queue of the flow and the dequeue gating in real time; and when the dequeue gating is not 0 and the queue is not empty, extracts the packet from the queue, and sends the packet. In this embodiment of this application, the dequeue gating is updated based on a time window. An initial value of the dequeue gating in each time window is a quantity of packets that can be sent for the corresponding flow in one time window, and progressively decreases based on a quantity of packets sent in each time window.

In a specific implementation, the dequeue gating may be implemented by using a token bucket. Updating the dequeue gating is to update a quantity of tokens in the token bucket.

Specifically, when the dequeue gating is implemented by using the token bucket, an implementation process of step 7d is shown in FIG. 8.

FIG. 8 is a flowchart of scheduling packet dequeue. The process includes the following steps:
S801. The network device checks, in real time, a packet in a queue of each piece of delay-sensitive traffic and a token in a token bucket; determines whether there is any queue meeting a condition that the queue is not empty and there is a token in a token bucket of the queue. If there is such a queue, step S802 is performed to extract and send the packet; or if there is no such a queue, S803 is performed.
S802. The network device extracts the packet from the queue, sends the packet, and decreases a quantity of tokens in the token bucket by 1, and then the process returns to S801.
S803. The network device schedules a packet in a lower-priority queue, and sends the packet.

Step S803 may be implemented by using the prior art. For example, a queue corresponding to non-delay sensitive traffic is scheduled, based on priority-based scheduling or polling-based scheduling, to perform dequeue and packet sending. Details are not described herein.

The following describes in detail a dequeue gating update process by using an example in which the dequeue gating is a token bucket.

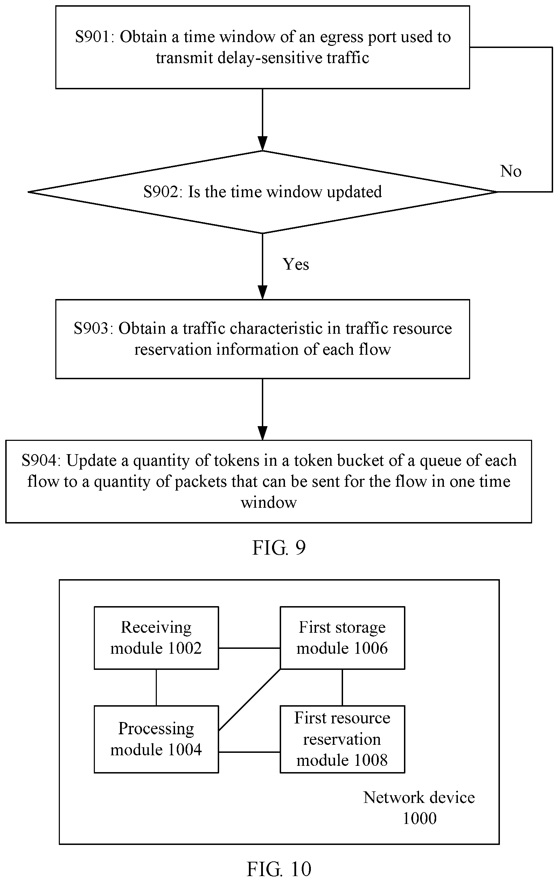

FIG. 9 is a flowchart of a token bucket update method. The method includes the following steps. S901. The network device obtains a time window of an egress port used to transmit delay-sensitive traffic.

For a method for obtaining the time window of the egress port, refer to step 5a shown in FIG. 5. Details are not described herein again.

S902. The network device determines whether the time window is updated. If the time window is updated, S903 is performed; or if the time window is not updated, the process returns to S901.

The determining whether the time window is updated is based on a time window that exists when the token bucket is updated last time.

S903. The network device obtains a traffic characteristic (namely, a quantity of packets that can be sent for each flow in one time window) in traffic resource reservation information of each flow.

S904. The network device updates a quantity of tokens in a token bucket of a queue of each flow to the quantity of packets that can be sent for the flow in one time window. In this solution, the dequeue gating is updated based on the quantity of packets that can be sent for the flow in one time window, and a value of the dequeue gating implies an accumulated quantity of packets that have been sent in one time window. Therefore, in this embodiment, a packet is also arranged, based on the quantity of packets that can be sent for the flow in one time window and an accumulated packet sending status in one time window, in a specific time window for sending.

In this solution, a time window is not limited during enqueue, but packet sending in each time window is controlled in a dequeue process. Therefore, no requirement is imposed on a time at which a packet is received, and no constraint is imposed on a sending time of an upstream device. The upstream device can send delay-sensitive traffic nearly in an entire time window, thereby increasing available bandwidth for delay-sensitive traffic and reducing resource waste of bandwidth.

In addition, in the foregoing embodiment, a quantity of packets sent in each time window can be ensured. This can ensure that an end-to-end delay has a committed upper limit. Therefore, in this embodiment of this application, available bandwidth for delay-sensitive traffic can be increased, and it can also be ensured that the delay-sensitive traffic has a committed end-to-end delay. In addition, according to the solution provided in this embodiment of this application, time windows in an entire network do not need to be aligned. This solution may be deployed on a device not supporting time alignment, thereby extending applicability.

The following describes a network device 1000 and a network device 1100 in the embodiments shown in FIG. 1 to FIG. 9 with reference to accompanying drawings. The network device 1000 is applied to the embodiments shown in FIG. 2 to FIG. 6. The network device 1100 is applied to the embodiments shown in FIG. 2 and FIG. 3 and the embodiments shown in FIG. 7 to FIG. 9. The following provides detailed descriptions.

FIG. 10 is a schematic structural diagram of a network device 1000 according to an embodiment of this application. The network device 1000 includes a receiving module 1002 and a processing module 1004.

The receiving module 1002 is configured to receive a packet. For a detailed processing function of the receiving module 1002 or a step that can be performed by the receiving module 1002, refer to the detailed descriptions of 5a in the embodiment shown in FIG. 5.

The processing module 1004 is configured to: identify that a flow to which the packet belongs is delay-sensitive traffic for a reserved resource, where the reserved resource includes a quantity of packets that can be sent for the flow in one time window; and arrange, based on the quantity of packets that can be sent for the flow in one time window, and an accumulated quantity of packets that have been sent in the time window, the packet in a specific time window for sending. For a detailed processing function of the processing module 1004 or a step that can be performed by the processing module 1004, refer to the detailed descriptions of 5b to 5h in the embodiment shown in FIG. 5, and the detailed descriptions of S601 to S608 in FIG. 6.

In a specific embodiment, the network device further includes a first storage module 1006. The first storage module 1006 is configured to store preconfigured queue resource reservation information and traffic resource reservation information that are used to send the flow. The queue resource reservation information includes the queue used to send the flow, and enqueue timing and output timing of the queue, where the enqueue timing is used to define an ingress queue of each time window, and the output timing is used to define an open/closed state of each queue in each time window. The traffic resource reservation information records a current ingress queue of the flow, and a packet count used to represent a quantity of packets in the current ingress queue. The accumulated packet sending status in the time window is the quantity of packets in the current ingress queue.

Correspondingly, that the processing module arranges, based on the quantity of packets that can be sent for the flow in one time window and an accumulated quantity of packets that have been sent in the time window, the packet in a specific time window for sending specifically includes:
determining, by the processing module, an arrival time window of the packet, where the arrival time window is a time window of the packet at an egress port of the network device when the packet arrives at the network device; querying for the quantity of packets in the current ingress queue; determining an ingress queue of the flow based on the arrival time window, the enqueue timing of the queue, the quantity of packets that can be sent for the flow in one time window, and the quantity of packets in the current ingress queue; adding the packet to the determined ingress queue of the flow; and
opening, in a time window that is defined in the output timing and that is for opening a queue in which the packet is located, the queue in which the packet is located, and sending the packet.

For detailed content about the first storage module 1006, refer to the detailed descriptions of step S304 in the embodiment shown in FIG. 3, and the detailed descriptions of Table 1 to Table 3 and corresponding text parts of the tables.

For a detailed processing function of the processing module 1004 or a step that can be performed by the processing module 1004, refer to the detailed descriptions of 5b to 5h in the embodiment shown in FIG. 5, and the detailed descriptions of S601 to S608 in FIG. 6.

In a specific embodiment, the network device further includes a first resource reservation module 1008. The first resource reservation module 1008 is configured to reserve a resource for the flow in advance, and the traffic resource reservation information is configured in the resource reservation process.

For a detailed processing function of the first resource reservation module 1008 or a step that can be performed by the first resource reservation module 1008, refer to the detailed descriptions of step S304 in the embodiment shown in FIG. 3, and the detailed descriptions of Table 1 to Table 3 and corresponding text parts of the tables.

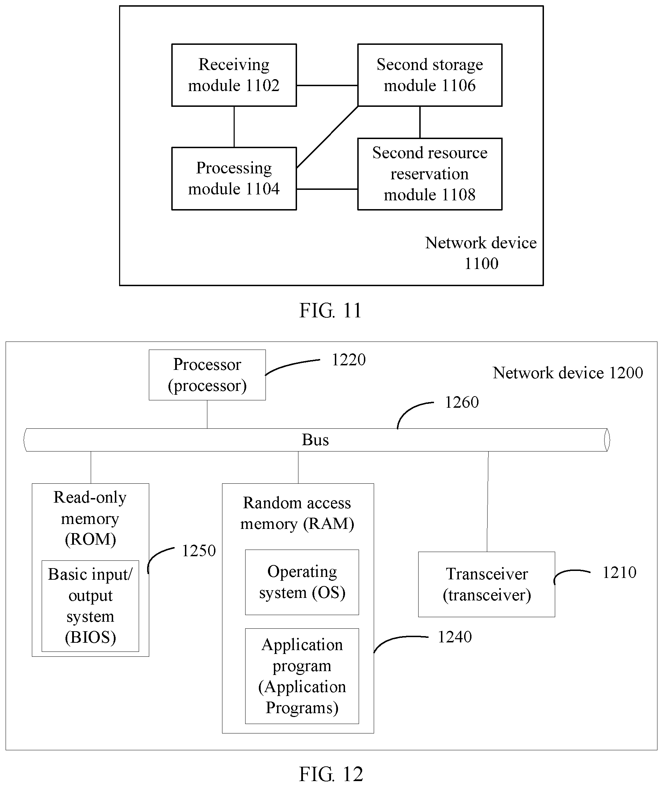

FIG. 11 is a schematic structural diagram of a network device 1100 according to an embodiment of this application. The network device 1100 includes a receiving module 1102 and a processing module 1104.

The receiving module 1102 is configured to receive a packet. For a detailed processing function of the receiving module 1102 or a step that can be performed by the receiving module 1102, refer to the detailed descriptions of 7a in the embodiment shown in FIG. 7.

The processing module 1104 is configured to: identify that a flow to which the packet belongs is delay-sensitive traffic for a reserved resource, where the reserved resource includes a quantity of packets that can be sent for the flow in one time window; and arrange, based on the quantity of packets that can be sent for the flow in one time window, and an accumulated quantity of packets that have been sent in the time window, the packet in a specific time window for sending.

For a detailed processing function of the processing module 1104 or a step that can be performed by the processing module 1104, refer to the detailed descriptions of 7b to 7d in the embodiment shown in FIG. 7, and the detailed descriptions of FIG. 8 and FIG. 9.

In a specific embodiment, the network device further includes a second storage module 1106. The second storage module 1106 is configured to store preconfigured queue resource reservation information and traffic resource reservation information that are used to send the flow. The queue resource reservation information includes a queue in a one-to-one correspondence with the flow, and a dequeue gating configured for the queue, where the dequeue gating is used to control a quantity of packets sent in each time window. The traffic resource reservation information includes the quantity of packets that can be sent for the flow in one time window.

Correspondingly, that the processing module 1104 arranges, based on the quantity of packets that can be sent for the flow in one time window and an accumulated packet sending status in the time window, the packet in a specific time window for sending specifically includes:
adding, by the processing module 1104, the packet to a queue corresponding to the flow to which the packet belongs; and extracting, based on the dequeue gating, the packet from the queue corresponding to the flow, and sending the packet, where the dequeue gating is updated based on a time window, and an initial value of the dequeue gating in each time window is a quantity of packets that can be sent for the flow corresponding to the queue in one time window, and decreases progressively based on a quantity of packets sent in each time window.

For detailed content about the second storage module 1106, refer to the detailed descriptions of step S304 in the embodiment shown in FIG. 3.

For a detailed processing function of the processing module 1104 or a step that can be performed by the processing module 1104, refer to the detailed descriptions of 7b to 7d in the embodiment shown in FIG. 7, and the detailed descriptions of FIG. 8 and FIG. 9.

In a specific embodiment, the network device further includes a second resource reservation module 1108. The second resource reservation module 1108 is configured to reserve a resource for the flow in advance, and the traffic resource reservation information and the queue resource reservation information are configured in the resource reservation process.

For a detailed processing function of the second resource reservation module 1108 or a step that can be performed by the second storage module 1108, refer to the detailed descriptions of step S304 in the embodiment shown in FIG. 3, and the detailed descriptions in the embodiment shown in FIG. 9. It should be understood that the described apparatus embodiments are merely examples. For example, the module division is merely logical function division and may be other division in actual implementation. For example, a plurality of modules, units, or components may be combined, or a module may be further divided into different function modules. For example, functions of the first resource reservation module in the network device in the foregoing embodiments may alternatively be combined with the processing module into one module. In addition, it should be noted that the couplings or communication connections between the modules or devices that are shown or described in the figures may be indirect couplings or communication connections implemented by using some interfaces, apparatuses, or units. Alternatively, the couplings or communication connections may be implemented in electrical, mechanical, or other forms.

The modules described as separate parts may be physically separated, or may be physically in a same physical part. A part named as a module may be a hardware unit, may be a software module or a logic unit, or may be a combination of hardware and software. The module may be located in one network element, or may be distributed on a plurality of network elements. Some or all of the units may be selected according to actual requirements to achieve the objectives of the solutions of the embodiments.

FIG. 12 is a possible schematic structural diagram of a network device 1200 according to an embodiment of this application. The network device 1200 may be applied to the embodiments shown in FIG. 2 to FIG. 9. In this embodiment, functions or operation steps of the network device are implemented by a general-purpose computer or one or more processors in a server by executing program code in a memory. In this implementation, the network device 1200 includes a transceiver 1210, a processor 1220, a random access memory 1240, a read-only memory 1250, and a bus 1260. The processor 1220 is coupled to the transceiver 1210, the random access memory 1240, and the read-only memory 1250 by using the bus 1260.

The processor 1220 may be a general-purpose central processing unit (CPU), a microprocessor, an application-specific integrated circuit (application-specific integrated circuit, ASIC), or one or more integrated circuits configured to control execution of programs of the solutions of the present invention.

The bus 1260 may include a path that transmits information among the foregoing components.

The transceiver 1210 is configured to communicate with another device or a communications network, such as Ethernet, a radio access network (RAN), or a wireless local area network (Wireless Local Area Networks, WLAN). In this embodiment of the present invention, the transceiver 1210 may be configured to communicate with a network control plane, a source-end device, or another network device.

In a specific implementation, the random access memory 1240 may load application program code that implements the network device in the embodiments shown in FIG. 2 to FIG. 6, and the processor 1220 controls execution of the application program code.

In another specific implementation, the random access memory 1240 may load application program code that implements the network device in the embodiments shown in FIG. 2 and FIG. 3 and the embodiments shown in FIG. 7 to FIG. 9, and the processor 1220 controls execution of the application program code.

When the network device 1200 needs to run, a basic input/output system solidified in the read-only memory 1250 or a bootloader boot system in an embedded system is used to start the network device 1200, and guide the network device 1200 into a normal running state. After the network device 1200 enters a normal running state, the processor 1220 runs an application program and an operating system in the random access memory 1240, so that the network device 1200 may separately perform functions and operations in the embodiments shown in FIG. 2 to FIG. 6, or functions and operations in the embodiments shown in FIG. 2 and FIG. 3 and the embodiments shown in FIG. 7 to FIG. 9.

The transceiver 1210 interacts with the network control plane, the another network device, or the source-end device under control of the processor 1220. Internal processing of the network device 1200 is performed by the processor 1220.

It should be noted that, in the implementation, in addition to the foregoing conventional manners such as the manner of executing a program code instruction in the memory by the processor, a virtual network device may be implemented based on a physical server in combination with a network functions virtualization NFV technology in this implementation. The virtual network device may be a virtual switch, a router, or another forwarding device. By reading this application, persons skilled in the art may virtualize, on a physical server in combination with the NFV technology, a plurality of network devices having the foregoing functions. Details are not described herein.

An embodiment of the present invention further provides a computer-readable storage medium, configured to store a computer software instruction used by the foregoing network device. The computer software instruction includes a program for performing functions of the network device in the embodiments shown in FIG. 2 to FIG. 6.

An embodiment of the present invention further provides another computer-readable storage medium, configured to store a computer software instruction used by the foregoing network device. The computer software instruction includes a program for performing functions of the network device in the embodiments shown in FIG. 2 and FIG. 3 and the embodiments shown in FIG. 7 to FIG. 9.

Although the present invention is described with reference to the embodiments, in a process of implementing the present invention that claims protection, persons skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of plurality. A single processor or another unit may implement functions enumerated in the claims. Some measures are recorded in dependent claims that are different from each other, but this does not mean that these measures cannot be combined to produce a desirable effect.

Persons skilled in the art should understand that the embodiments of this application may be provided as a method, an apparatus (device), or a computer program product. Therefore, the embodiments of this application may be hardware only embodiments, software only embodiments, or hardware and software combined embodiments. Moreover, this application may use a form of a computer program product that is implemented on one or more computer-usable storage media (including but not limited to a disk memory, a CD-ROM, an optical memory, and the like) that include computer usable program code. The computer program is stored/distributed in a proper medium and is provided together with other hardware or used as a part of hardware, or may also use another distribution form, such as by using the Internet or another wired or wireless telecommunications system.

The present invention is described with reference to the flowcharts and/or block diagrams of the method, the apparatus (device), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct a computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams. These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although the present invention is described with reference to specific features and the embodiments thereof, obviously, various modifications and combinations may be made to them without departing from the scope of the present invention. Correspondingly, the specification and accompanying drawings are merely example descriptions of the present invention defined by the appended claims, and are considered to have covered any of or all modifications, variations, or combinations that cover the scope of the present invention. Obviously, persons skilled in the art can make various modifications and variations to the present invention without departing from the scope of the present invention. The present invention is intended to cover these modifications and variations provided that they fall within the scope of the claims of the present invention.

## Claims

1. A packet sending method, wherein the method comprises:
receiving (7a), by a network device, a packet;
identifying (7b), by the network device, that a flow to which the packet belongs is delay-sensitive traffic for a reserved resource, wherein the reserved resource comprises a quantity of packets that can be sent for the flow in one time window; and
arranging (7c), by the network device based on the quantity of packets that can be sent for the flow in one time window, and an accumulated quantity of packets that have been sent in the time window, and a quantity of packets already in a queue used to send the flow, the packet in a specific time window for sending;
**characterized in that** the arranging, by the network device based on the quantity of packets that can be sent for the flow in one time window and an accumulated quantity of packets that have been sent in the time window, the packet in a specific time window for sending comprises:
determining, by the network device, an arrival time window of the packet, wherein the arrival time window is a time window of the packet at an egress port of the network device when the packet arrives at the network device;
querying, by the network device, for the quantity of packets in the current ingress queue;
determining, by the network device, an ingress queue of the flow based on the arrival time window, the enqueue timing of the queue, the quantity of packets that can be sent for the flow in one time window, and the quantity of packets in the current ingress queue;
adding, by the network device, the packet to the determined ingress queue of the flow; and
opening, by the network device in a time window that is defined in the output timing and that is for opening a queue in which the packet is located, the queue in which the packet is located, and sending the packet.

2. The method according to claim 1, wherein queue resource reservation information and traffic resource reservation information used to send the flow are preconfigured in the network device; the queue resource reservation information comprises a queue used to send the flow, and enqueue timing and output timing of the queue, wherein the enqueue timing is used to define an ingress queue of each time window, and the output timing is used to define an open/closed state of each queue in each time window; the traffic resource reservation information records a current ingress queue of the flow, and a packet count used to represent a quantity of packets in the current ingress queue; and the accumulated packet sending status in the time window is the quantity of packets in the current ingress queue.

3. The method according to claim 2, wherein the determining, by the network device, an ingress queue of the flow based on the arrival time window, the enqueue timing of the queue, the quantity of packets that can be sent for the flow in one time window, and the quantity of packets in the current ingress queue comprises:
if the quantity of packets in the current ingress queue has reached the quantity of packets that can be sent in one time window, determining, by the network device, an ingress queue of a next time window of the arrival time window as the ingress queue of the flow; or if the quantity of packets in the current ingress queue has not reached the quantity of packets that can be sent in one time window, determining an ingress queue of the arrival time window as the ingress queue of the flow.

4. The method according to claim 2, wherein in the enqueue timing, a time window further has an alternative ingress queue, and an alternative ingress queue of a time window is an ingress queue of a next time window; and
the determining, by the network device, an ingress queue of the flow based on the arrival time window, the enqueue timing of the queue, the quantity of packets that can be sent for the flow in one time window, and the quantity of packets in the current ingress queue comprises:
if the quantity of packets in the current ingress queue has reached the quantity of packets that can be sent in one time window, determining, by the network device, an alternative ingress queue of the arrival time window as the ingress queue of the flow; or if the quantity of packets in the current ingress queue has not reached the quantity of packets that can be sent in one time window, determining an ingress queue of the arrival time window as the ingress queue of the flow.

5. The method according to any one of claims 2 to 4, wherein in the output timing, an ingress queue of an M^{th} time window is in an open state in an (M+1)^{th} time window, and is in a closed state in another time window, wherein M is an integer greater than or equal to 1.

6. The method according to any one of claims 1 to 5, wherein the method further comprises:
reserving, by the network device, the resource for the flow in advance, wherein the traffic resource reservation information is configured in an resource reservation process.

7. A network device, wherein the network device comprises a receiving module (1002) and a processing module (1004);
the receiving module (1002) is configured to receive a packet; and
the processing module (1004) is configured to: identify that a flow to which the packet belongs is delay-sensitive traffic for a reserved resource, wherein the reserved resource comprises a quantity of packets that can be sent for the flow in one time window; and arrange, based on the quantity of packets that can be sent for the flow in one time window, and an accumulated quantity of packets that have been sent in the time window, the packet in a specific time window for sending;
**characterised in that** that the processing module (1004) arranges, based on the quantity of packets that can be sent for the flow in one time window and an accumulated quantity of packets that have been sent in the time window, the packet in a specific time window for sending comprises:
the processing module (1004) is specifically configured to:
determine an arrival time window of the packet, wherein the arrival time window is a time window of the packet at an egress port of the network device when the packet arrives at the network device;
query for the quantity of packets in the current ingress queue;
determine an ingress queue of the flow based on the arrival time window, the enqueue timing of the queue, the quantity of packets that can be sent for the flow in one time window, and the quantity of packets in the current ingress queue;
add the packet to the determined ingress queue of the flow; and
open, in a time window that is defined in the output timing and that is for opening a queue in which the packet is located, the queue in which the packet is located, and sending the packet.

8. The network device according to claim 7, wherein the network device further comprises a first storage module (1006);
the first storage module (1006) is configured to store preconfigured queue resource reservation information and traffic resource reservation information that are used to send the flow; the queue resource reservation information comprises the queue used to send the flow, and enqueue timing and output timing of the queue, wherein the enqueue timing is used to define an ingress queue of each time window, and the output timing is used to define an open/closed state of each queue in each time window; the traffic resource reservation information records a current ingress queue of the flow, and a packet count used to represent a quantity of packets in the current ingress queue; and the accumulated packet sending status in the time window is the quantity of packets in the current ingress queue.

9. The network device according to claim 8, wherein
the determining, by the processing module (1004), an ingress queue of the flow based on the arrival time window, the enqueue timing of the queue, the quantity of packets that can be sent for the flow in one time window, and the quantity of packets in the current ingress queue comprises:
if the quantity of packets in the current ingress queue has reached the quantity of packets that can be sent in one time window, determining, by the processing module (1004), an ingress queue of a next time window of the arrival time window as the ingress queue of the flow; or if the quantity of packets in the current ingress queue has not reached the quantity of packets that can be sent in one time window, determining an ingress queue of the arrival time window as the ingress queue of the flow.

10. The network device according to claim 8, wherein in the enqueue timing, a time window further has an alternative ingress queue, and an alternative ingress queue of a time window is an ingress queue of a next time window; and
the determining, by the processing module (1004), an ingress queue of the flow based on the arrival time window, the enqueue timing of the queue, the quantity of packets that can be sent for the flow in one time window, and the quantity of packets in the current ingress queue comprises:
if the quantity of packets in the current ingress queue has reached the quantity of packets that can be sent in one time window, determining, by the processing module (1004), an alternative ingress queue of the arrival time window as the ingress queue of the flow; or if the quantity of packets in the current ingress queue has not reached the quantity of packets that can be sent in one time window, determining an ingress queue of the arrival time window as the ingress queue of the flow.

11. The network device according to any one of claims 8 to 10, wherein in the output timing, an ingress queue of an M^{th} time window is in an open state in an (M+1)^{th} time window, and is in a closed state in another time window, wherein M is an integer greater than or equal to 1.

12. The network device according to any one of claims 7 to 11, wherein the network device further comprises a first resource reservation module (1008), the first resource reservation module (1008) is configured to reserve a resource for the flow in advance, and the traffic resource reservation information is configured in a resource reservation process.

## Patentansprüche

1. Paketsendungsverfahren, wobei das Verfahren Folgendes umfasst:
Empfangen (7a), durch eine Netzvorrichtung, eines Pakets;
Identifizieren (7b), durch die Netzvorrichtung, dass ein Fluss, zu dem das Paket gehört, verzögerungsempfindlicher Verkehr für eine reservierte Ressource ist, wobei die reservierte Ressource eine Quantität von Paketen umfasst, die für den Fluss in einem Zeitfenster gesendet werden kann; und
Anordnen (7c), durch die Netzvorrichtung basierend auf der Quantität von Paketen, die für den Fluss in einem Zeitfenster gesendet werden kann, und einer akkumulierten Quantität von Paketen, die in dem Zeitfenster gesendet worden ist, und einer Quantität von Paketen, die sich bereits in einer Warteschlange befindet, die dazu verwendet wird, den Fluss zu senden, des Pakets in einem spezifischen Zeitfenster zum Senden;
**dadurch gekennzeichnet, dass** das Anordnen, durch die Netzvorrichtung basierend auf der Quantität von Paketen, die für den Fluss in einem Zeitfenster gesendet werden kann, und einer akkumulierten Quantität von Paketen, die in dem Zeitfenster gesendet worden ist, des Pakets in einem spezifischen Zeitfenster zum Senden Folgendes umfasst:
Bestimmen, durch die Netzvorrichtung, eines Eintreffzeitfensters des Pakets, wobei das Eintreffzeitfenster ein Zeitfenster des Pakets an einem Ausgangsanschluss der Netzvorrichtung ist, wenn das Paket bei der Netzvorrichtung eintrifft;
Abfragen, durch die Netzvorrichtung, der Quantität von Paketen in der aktuellen Eingangswarteschlange;
Bestimmen, durch die Netzvorrichtung, einer Eingangswarteschlange des Flusses basierend auf dem Eintreffzeitfenster, der Warteschlangeneinreihungszeitplanung der Warteschlange, der Quantität von Paketen, die für den Fluss in einem Zeitfenster gesendet werden kann, und der Quantität von Paketen in der aktuellen Eingangswarteschlange;
Hinzufügen, durch die Netzvorrichtung, des Pakets zu der bestimmten Eingangswarteschlange des Flusses; und
Öffnen, durch die Netzvorrichtung in einem Zeitfenster, das in der Ausgabezeitplanung definiert ist und das sich auf Öffnen einer Warteschlange bezieht, in der sich das Paket befindet, der Warteschlange, in der sich das Paket befindet, und Senden des Pakets.

2. Verfahren nach Anspruch 1, wobei Warteschlangenressourcenreservierungsinformationen und Verkehrsressourcenreservierungsinformationen, die dazu verwendet werden, den Fluss zu senden, in der Netzvorrichtung vorkonfiguriert sind; die Warteschlangenressourcenreservierungsinformationen eine Warteschlange, die dazu verwendet wird, den Fluss zu senden, und eine Warteschlangeneinreihungszeitplanung und Ausgabezeitplanung der Warteschlange umfassen, wobei die Warteschlangeneinreihungszeitplanung dazu verwendet wird, eine Eingangswarteschlange jedes Zeitfensters zu definieren, und die Ausgabezeitplanung dazu verwendet wird, einen offenen/geschlossenen Zustand jeder Warteschlange in jedem Zeitfenster zu definieren; die Verkehrsressourcenreservierungsinformationen eine aktuelle Eingangswarteschlange des Flusses und eine Paketzählung, die dazu verwendet wird, eine Quantität von Paketen in der aktuellen Eingangswarteschlange darzustellen, aufzeichnen; und der akkumulierte Paketsendungsstatus in dem Zeitfenster die Quantität von Paketen in der aktuellen Eingangswarteschlange ist.

3. Verfahren nach Anspruch 2, wobei das Bestimmen, durch die Netzvorrichtung, einer Eingangswarteschlange des Flusses basierend auf dem Eintreffzeitfenster, der Warteschlangeneinreihungszeitplanung der Warteschlange, der Quantität von Paketen, die für den Fluss in einem Zeitfenster gesendet werden kann, und der Quantität von Paketen in der aktuellen Eingangswarteschlange Folgendes umfasst:
wenn die Quantität von Paketen in der aktuellen Eingangswarteschlange die Quantität von Paketen erreicht hat, die in einem Zeitfenster gesendet werden kann, Bestimmen, durch die Netzvorrichtung, einer Eingangswarteschlange eines nächsten Zeitfensters des Eintreffzeitfensters als die Eingangswarteschlange des Flusses; oder, wenn die Quantität von Paketen in der aktuellen Eingangswarteschlange nicht die Quantität von Paketen erreicht hat, die in einem Zeitfenster gesendet werden kann, Bestimmen einer Eingangswarteschlange des Eintreffzeitfensters als die Eingangswarteschlange des Flusses.

4. Verfahren nach Anspruch 2, wobei in der Warteschlangeneinreihungszeitplanung ein Zeitfenster ferner eine alternative Eingangswarteschlange aufweist und eine alternative Eingangswarteschlange eines Zeitfensters eine Eingangswarteschlange eines nächsten Zeitfensters ist; und
das Bestimmen, durch die Netzvorrichtung, einer Eingangswarteschlange des Flusses basierend auf dem Eintreffzeitfenster, der Warteschlangeneinreihungszeitplanung der Warteschlange, der Quantität von Paketen, die für den Fluss in einem Zeitfenster gesendet werden kann, und der Quantität von Paketen in der aktuellen Eingangswarteschlange Folgendes umfasst:
wenn die Quantität von Paketen in der aktuellen Eingangswarteschlange die Quantität von Paketen erreicht hat, die in einem Zeitfenster gesendet werden kann, Bestimmen, durch die Netzvorrichtung, einer alternativen Eingangswarteschlange des Eintreffzeitfensters als die Eingangswarteschlange des Flusses; oder, wenn die Quantität von Paketen in der aktuellen Eingangswarteschlange nicht die Quantität von Paketen erreicht hat, die in einem Zeitfenster gesendet werden kann, Bestimmen einer Eingangswarteschlange des Eintreffzeitfensters als die Eingangswarteschlange des Flusses.

5. Verfahren nach einem der Ansprüche 2 bis 4, wobei sich in der Ausgabezeitplanung eine Eingangswarteschlange eines M-ten Zeitfensters in einem (M+1)-ten Zeitfenster in einem offenen Zustand befindet und in einem anderen Zeitfenster in einem geschlossenen Zustand befindet, wobei M eine Ganzzahl größer oder gleich 1 ist.

6. Verfahren nach einem der Ansprüche 1 bis 5, wobei das Verfahren ferner Folgendes umfasst:
im Voraus Reservieren, durch die Netzvorrichtung, der Ressource für den Fluss, wobei die Verkehrsressourcenreservierungsinformationen in einem Ressourcenreservierungsprozess konfiguriert werden.

7. Netzvorrichtung, wobei die Netzvorrichtung ein Empfangsmodul (1002) und ein Verarbeitungsmodul (1004) umfasst;
das Empfangsmodul (1002) dazu konfiguriert ist, ein Paket zu empfangen; und
das Verarbeitungsmodul (1004) zu Folgendem konfiguriert ist:
Identifizieren, dass ein Fluss, zu dem das Paket gehört, verzögerungsempfindlicher Verkehr für eine reservierte Ressource ist, wobei die reservierte Ressource eine Quantität von Paketen umfasst, die für den Fluss in einem Zeitfenster gesendet werden kann; und Anordnen, basierend auf der Quantität von Paketen, die für den Fluss in einem Zeitfenster gesendet werden kann, und einer akkumulierten Quantität von Paketen, die in dem Zeitfenster gesendet worden ist, des Pakets in einem spezifischen Zeitfenster zum Senden;
**dadurch gekennzeichnet, dass**, dass das Verarbeitungsmodul (1004) basierend auf der Quantität von Paketen, die für den Fluss in einem Zeitfenster gesendet werden kann, und einer akkumulierten Quantität von Paketen, die in dem Zeitfenster gesendet worden ist, das Paket in einem spezifischen Zeitfenster zum Senden anordnet, Folgendes umfasst:
das Verarbeitungsmodul (1004) ist spezifisch zu Folgendem konfiguriert:
Bestimmen eines Eintreffzeitfensters des Pakets, wobei das Eintreffzeitfenster ein Zeitfenster des Pakets an einem Ausgangsanschluss der Netzvorrichtung ist, wenn das Paket bei der Netzvorrichtung eintrifft;
Abfragen der Quantität von Paketen in der aktuellen Eingangswarteschlange;
Bestimmen einer Eingangswarteschlange des Flusses basierend auf dem Eintreffzeitfenster, der Warteschlangeneinreihungszeitplanung der Warteschlange, der Quantität von Paketen, die für den Fluss in einem Zeitfenster gesendet werden kann, und der Quantität von Paketen in der aktuellen Eingangswarteschlange;
Hinzufügen des Pakets zu der bestimmten Eingangswarteschlange des Flusses; und
Öffnen, in einem Zeitfenster, das in der Ausgabezeitplanung definiert ist und das sich auf Öffnen einer Warteschlange bezieht, in der sich das Paket befindet, der Warteschlange, in der sich das Paket befindet, und Senden des Pakets.

8. Netzvorrichtung nach Anspruch 7, wobei die Netzvorrichtung ferner ein erstes Speichermodul (1006) umfasst;
das erste Speichermodul (1006) dazu konfiguriert ist, vorkonfigurierte Warteschlangenressourcenreservierungsinformationen und Verkehrsressourcenreservierungsinformationen, die dazu verwendet werden, den Fluss zu senden, zu speichern; die Warteschlangenressourcenreservierungsinformationen die Warteschlange, die dazu verwendet wird, den Fluss zu senden, und eine Warteschlangeneinreihungszeitplanung und Ausgabezeitplanung der Warteschlange umfassen, wobei die Warteschlangeneinreihungszeitplanung dazu verwendet wird, eine Eingangswarteschlange jedes Zeitfensters zu definieren, und die Ausgabezeitplanung dazu verwendet wird, einen offenen/geschlossenen Zustand jeder Warteschlange in jedem Zeitfenster zu definieren; die Verkehrsressourcenreservierungsinformationen eine aktuelle Eingangswarteschlange des Flusses und eine Paketzählung, die dazu verwendet wird, eine Quantität von Paketen in der aktuellen Eingangswarteschlange darzustellen, aufzeichnen; und der akkumulierte Paketsendungsstatus in dem Zeitfenster die Quantität von Paketen in der aktuellen Eingangswarteschlange ist.

9. Netzvorrichtung nach Anspruch 8, wobei
das Bestimmen, durch das Verarbeitungsmodul (1004), einer Eingangswarteschlange des Flusses basierend auf dem Eintreffzeitfenster, der Warteschlangeneinreihungszeitplanung der Warteschlange, der Quantität von Paketen, die für den Fluss in einem Zeitfenster gesendet werden kann, und der Quantität von Paketen in der aktuellen Eingangswarteschlange Folgendes umfasst:
wenn die Quantität von Paketen in der aktuellen Eingangswarteschlange die Quantität von Paketen erreicht hat, die in einem Zeitfenster gesendet werden kann, Bestimmen, durch das Verarbeitungsmodul (1004), einer Eingangswarteschlange eines nächsten Zeitfensters des Eintreffzeitfensters als die Eingangswarteschlange des Flusses; oder, wenn die Quantität von Paketen in der aktuellen Eingangswarteschlange nicht die Quantität von Paketen erreicht hat, die in einem Zeitfenster gesendet werden kann, Bestimmen einer Eingangswarteschlange des Eintreffzeitfensters als die Eingangswarteschlange des Flusses.

10. Netzvorrichtung nach Anspruch 8, wobei in der Warteschlangeneinreihungszeitplanung ein Zeitfenster ferner eine alternative Eingangswarteschlange aufweist und eine alternative Eingangswarteschlange eines Zeitfensters eine Eingangswarteschlange eines nächsten Zeitfensters ist; und
das Bestimmen, durch das Verarbeitungsmodul (1004), einer Eingangswarteschlange des Flusses basierend auf dem Eintreffzeitfenster, der Warteschlangeneinreihungszeitplanung der Warteschlange, der Quantität von Paketen, die für den Fluss in einem Zeitfenster gesendet werden kann, und der Quantität von Paketen in der aktuellen Eingangswarteschlange Folgendes umfasst:
wenn die Quantität von Paketen in der aktuellen Eingangswarteschlange die Quantität von Paketen erreicht hat, die in einem Zeitfenster gesendet werden kann, Bestimmen, durch das Verarbeitungsmodul (1004), einer alternativen Eingangswarteschlange des Eintreffzeitfensters als die Eingangswarteschlange des Flusses; oder, wenn die Quantität von Paketen in der aktuellen Eingangswarteschlange nicht die Quantität von Paketen erreicht hat, die in einem Zeitfenster gesendet werden kann, Bestimmen einer Eingangswarteschlange des Eintreffzeitfensters als die Eingangswarteschlange des Flusses.

11. Netzvorrichtung nach einem der Ansprüche 8 bis 10, wobei sich in der Ausgabezeitplanung eine Eingangswarteschlange eines M-ten Zeitfensters in einem (M+1)-ten Zeitfenster in einem offenen Zustand befindet und in einem anderen Zeitfenster in einem geschlossenen Zustand befindet, wobei M eine Ganzzahl größer oder gleich 1 ist.

12. Netzvorrichtung nach einem der Ansprüche 7 bis 11, wobei die Netzvorrichtung ferner ein erstes Ressourcenreservierungsmodul (1008) umfasst, das erste Ressourcenreservierungsmodul (1008) dazu konfiguriert ist, eine Ressource für den Fluss im Voraus zu reservieren, und die Verkehrsressourcenreservierungsinformationen in einem Ressourcenreservierungsprozess konfiguriert sind.

## Revendications

1. Procédé d'envoi de paquets, dans lequel le procédé comprend :
la réception (7a), par un dispositif de réseau, d'un paquet ;
l'identification (7b), par le dispositif de réseau, qu'un flux auquel appartient le paquet est un trafic sensible au retard pour une ressource réservée, dans lequel la ressource réservée comprend une quantité de paquets qui peuvent être envoyés pour le flux dans une fenêtre temporelle ; et
la disposition (7c), par le dispositif de réseau sur la base de la quantité de paquets qui peuvent être envoyés pour le flux dans une fenêtre temporelle, et d'une quantité accumulée de paquets qui ont été envoyés dans la fenêtre temporelle, et d'une quantité de paquets déjà dans une file d'attente utilisée pour envoyer le flux, du paquet dans une fenêtre temporelle spécifique pour l'envoi ;
**caractérisé en ce que** la disposition, par le dispositif de réseau sur la base de la quantité de paquets qui peuvent être envoyés pour le flux dans une fenêtre temporelle et d'une quantité accumulée de paquets qui ont été envoyés dans la fenêtre temporelle, du paquet dans une fenêtre temporelle spécifique pour l'envoi comprend :
la détermination, par le dispositif de réseau, d'une fenêtre temporelle d'arrivée du paquet, dans lequel la fenêtre temporelle d'arrivée est une fenêtre temporelle du paquet au niveau d'un port de sortie du dispositif de réseau lorsque le paquet arrive au dispositif de réseau ;
la demande, par le dispositif de réseau, de la quantité de paquets dans la file d'attente d'entrée actuelle ;
la détermination, par le dispositif de réseau, d'une file d'attente d'entrée du flux sur la base de la fenêtre temporelle d'arrivée, de la synchronisation de mise en file d'attente de la file d'attente, de la quantité de paquets qui peuvent être envoyés pour le flux dans une fenêtre temporelle,
et de la quantité de paquets dans la file d'attente d'entrée actuelle ;
l'ajout, par le dispositif de réseau, du paquet à la file d'attente d'entrée déterminée du flux ; et
l'ouverture, par le dispositif de réseau dans une fenêtre temporelle qui est définie dans la synchronisation de sortie et qui est destinée à ouvrir une file d'attente dans laquelle se trouve le paquet, de la file d'attente dans laquelle se trouve le paquet, et l'envoi du paquet.

2. Procédé selon la revendication 1, dans lequel des informations de réservation de ressource de file d'attente et des informations de réservation de ressource de trafic utilisées pour envoyer le flux sont préconfigurées dans le dispositif de réseau ; les informations de réservation de ressource de file d'attente comprennent une file d'attente utilisée pour envoyer le flux, et une synchronisation de mise en file d'attente et une synchronisation de sortie de la file d'attente, dans lequel la synchronisation de mise en file d'attente est utilisée pour définir une file d'attente d'entrée de chaque fenêtre temporelle, et la synchronisation de sortie est utilisée pour définir un état ouvert/fermé de chaque file d'attente dans chaque fenêtre temporelle ; les informations de réservation de ressource de trafic enregistrent une file d'attente d'entrée actuelle du flux, et un nombre de paquets utilisé pour représenter une quantité de paquets dans la file d'attente d'entrée actuelle ; et l'état d'envoi de paquets accumulés dans la fenêtre temporelle est la quantité de paquets dans la file d'attente d'entrée actuelle.

3. Procédé selon la revendication 2, dans lequel la détermination, par le dispositif de réseau, d'une file d'attente d'entrée du flux sur la base de la fenêtre temporelle d'arrivée, de la synchronisation de mise en file d'attente de la file d'attente, de la quantité de paquets qui peuvent être envoyés pour le flux dans une fenêtre temporelle, et de la quantité de paquets dans la file d'attente d'entrée actuelle comprend :
si la quantité de paquets dans la file d'attente d'entrée actuelle a atteint la quantité de paquets qui peuvent être envoyés dans une fenêtre temporelle, la détermination, par le dispositif de réseau, d'une file d'attente d'entrée d'une fenêtre temporelle suivante de la fenêtre temporelle d'arrivée comme étant la file d'attente d'entrée du flux ; ou si la quantité de paquets dans la file d'attente d'entrée actuelle n'a pas atteint la quantité de paquets qui peuvent être envoyés dans une fenêtre temporelle, la détermination d'une file d'attente d'entrée de la fenêtre temporelle d'arrivée comme étant la file d'attente d'entrée du flux.

4. Procédé selon la revendication 2, dans lequel, dans la synchronisation de mise en file d'attente, une fenêtre temporelle a également une file d'attente d'entrée alternative, et une file d'attente d'entrée alternative d'une fenêtre temporelle est une file d'attente d'entrée d'une fenêtre temporelle suivante ; et
la détermination, par le dispositif de réseau, d'une file d'attente d'entrée du flux sur la base de la fenêtre temporelle d'arrivée, de la synchronisation de mise en file d'attente de la file d'attente, de la quantité de paquets qui peuvent être envoyés pour le flux dans une fenêtre temporelle et de la quantité de paquets dans la file d'attente d'entrée actuelle comprend :
si la quantité de paquets dans la file d'attente d'entrée actuelle a atteint la quantité de paquets qui peuvent être envoyés dans une fenêtre temporelle, la détermination, par le dispositif de réseau, d'une file d'attente d'entrée alternative de la fenêtre temporelle d'arrivée comme étant la file d'attente d'entrée du flux ; ou si la quantité de paquets dans la file d'attente d'entrée actuelle n'a pas atteint la quantité de paquets qui peuvent être envoyés dans une fenêtre temporelle, la détermination d'une file d'attente d'entrée de la fenêtre temporelle d'arrivée comme étant la file d'attente d'entrée du flux.

5. Procédé selon l'une quelconque des revendications 2 à 4, dans lequel, dans la synchronisation de sortie, une file d'attente d'entrée d'une M^{ème} fenêtre temporelle est dans un état ouvert dans une (M+1)^{ème} fenêtre temporelle, et est dans un état fermé dans une autre fenêtre temporelle, dans lequel M est un entier supérieur ou égal à 1.

6. Procédé selon l'une quelconque des revendications 1 à 5, dans lequel le procédé comprend également :
la réservation, par le dispositif de réseau, de la ressource pour le flux à l'avance, dans lequel les informations de réservation de ressource de trafic sont configurées dans un processus de réservation de ressource.

7. Dispositif de réseau, dans lequel le dispositif de réseau comprend un module de réception (1002) et un module de traitement (1004) ;
le module de réception (1002) est configuré pour recevoir un paquet ; et
le module de traitement (1004) est configuré pour : identifier qu'un flux auquel appartient le paquet est un trafic sensible au retard pour une ressource réservée, dans lequel la ressource réservée comprend une quantité de paquets qui peuvent être envoyés pour le flux dans une fenêtre temporelle ; et disposer, sur la base de la quantité de paquets qui peuvent être envoyés pour le flux dans une fenêtre temporelle, et d'une quantité accumulée de paquets qui ont été envoyés dans la fenêtre temporelle, le paquet dans une fenêtre temporelle spécifique pour l'envoi ;
**caractérisé en ce que** le fait que le module de traitement (1004) dispose, sur la base de la quantité de paquets qui peuvent être envoyés pour le flux dans une fenêtre temporelle et d'une quantité accumulée de paquets qui ont été envoyés dans la fenêtre temporelle, le paquet dans une fenêtre temporelle spécifique pour l'envoi comprend :
le module de traitement (1004) est spécifiquement configurée pour :
déterminer une fenêtre temporelle d'arrivée du paquet, dans lequel la fenêtre temporelle d'arrivée est une fenêtre temporelle du paquet au niveau d'un port de sortie du dispositif de réseau lorsque le paquet arrive au dispositif de réseau ;
demander la quantité de paquets dans la file d'attente d'entrée actuelle ;
déterminer une file d'attente d'entrée du flux sur la base de la fenêtre temporelle d'arrivée, de la synchronisation de mise en file d'attente de la file d'attente, de la quantité de paquets qui peuvent être envoyés pour le flux dans une fenêtre temporelle et de la quantité de paquets dans la file d'attente d'entrée actuelle ;
ajouter le paquet à la file d'attente d'entrée déterminée du flux ; et
ouvrir, dans une fenêtre temporelle qui est définie dans la synchronisation de sortie et qui est destinée à ouvrir une file d'attente dans laquelle se trouve le paquet, la file d'attente dans laquelle se trouve le paquet et envoyer le paquet.

8. Dispositif de réseau selon la revendication 7, dans lequel le dispositif de réseau comprend également un premier module de stockage (1006) ;
le premier module de stockage (1006) est configuré pour stocker des informations de réservation de ressource de file d'attente et des informations de réservation de ressource de trafic préconfigurées qui sont utilisées pour envoyer le flux ; les informations de réservation de ressource de file d'attente comprennent la file d'attente utilisée pour envoyer le flux, et la synchronisation de mise en file d'attente et la synchronisation de sortie de la file d'attente, dans lequel la synchronisation de mise en file d'attente est utilisée pour définir une file d'attente d'entrée de chaque fenêtre temporelle, et la synchronisation de sortie est utilisée pour définir un état ouvert/fermé de chaque file d'attente dans chaque fenêtre temporelle ; les informations de réservation de ressources de trafic enregistrent une file d'attente d'entrée actuelle du flux, et un nombre de paquets utilisé pour représenter une quantité de paquets dans la file d'attente d'entrée actuelle ; et l'état d'envoi de paquets accumulés dans la fenêtre temporelle est la quantité de paquets dans la file d'attente d'entrée actuelle.

9. Dispositif de réseau selon la revendication 8, dans lequel
la détermination, par le module de traitement (1004), d'une file d'attente d'entrée du flux sur la base de la fenêtre temporelle d'arrivée, de la synchronisation de mise en file d'attente de la file d'attente, de la quantité de paquets qui peuvent être envoyés pour le flux dans une fenêtre temporelle et de la quantité de paquets dans la file d'attente d'entrée actuelle comprend :
si la quantité de paquets dans la file d'attente d'entrée actuelle a atteint la quantité de paquets qui peuvent être envoyés dans une fenêtre temporelle, la détermination, par le module de traitement (1004), d'une file d'attente d'entrée d'une fenêtre temporelle suivante de la fenêtre temporelle d'arrivée comme étant la file d'attente d'entrée du flux ; ou
si la quantité de paquets dans la file d'attente d'entrée actuelle n'a pas atteint la quantité de paquets qui peuvent être envoyés dans une fenêtre temporelle, la détermination d'une file d'attente d'entrée de la fenêtre temporelle d'arrivée comme étant la file d'attente d'entrée du flux.

10. Dispositif de réseau selon la revendication 8, dans lequel dans la synchronisation de mise en file d'attente, une fenêtre temporelle a également une file d'attente d'entrée alternative, et une file d'attente d'entrée alternative d'une fenêtre temporelle est une file d'attente d'entrée d'une fenêtre temporelle suivante ; et
la détermination, par le module de traitement (1004), d'une file d'attente d'entrée du flux sur la base de la fenêtre temporelle d'arrivée, de la synchronisation de mise en file d'attente de la file d'attente, de la quantité de paquets qui peuvent être envoyés pour le flux dans une fenêtre temporelle, et de la quantité de paquets dans la file d'attente d'entrée actuelle comprend :
si la quantité de paquets dans la file d'attente d'entrée actuelle a atteint la quantité de paquets qui peuvent être envoyés dans une fenêtre temporelle, la détermination, par le module de traitement (1004), d'une file d'attente d'entrée alternative de la fenêtre temporelle d'arrivée comme étant la file d'attente d'entrée du flux ; ou si la quantité de paquets dans la file d'attente d'entrée actuelle n'a pas atteint la quantité de paquets qui peuvent être envoyés dans une fenêtre temporelle, la détermination d'une file d'attente d'entrée de la fenêtre temporelle d'arrivée comme étant la file d'attente d'entrée du flux.

11. Dispositif de réseau selon l'une quelconque des revendications 8 à 10, dans lequel dans la synchronisation de sortie, une file d'attente d'entrée d'une M^{ème} fenêtre temporelle est dans un état ouvert dans une (M+1)^{ème} fenêtre temporelle, et est dans un état fermé dans une autre fenêtre temporelle, dans lequel M est un entier supérieur ou égal à 1.

12. Dispositif de réseau selon l'une quelconque des revendications 7 à 11, dans lequel le dispositif de réseau comprend également un premier module de réservation de ressource (1008), le premier module de réservation de ressource (1008) est configuré pour réserver une ressource pour le flux à l'avance, et les informations de réservation de ressource de trafic sont configurées dans un processus de réservation de ressource.
